# EUROPÄISCHE PATENTSCHRIFT

(11) **EP 3 414 372 B1**
(45) Veröffentlichungstag und Bekanntmachung des Hinweises auf die Patenterteilung: **24.03.2021**
(21) Anmeldenummer: 17705580.3
(22) Anmeldetag: 10.02.2017
(51) Int. Cl.: D01D 5/38, D01D 10/00, D01D 5/24, B01D 69/08

(54) **FILAMENTHERSTELLVORRICHTUNG**
FILAMENT PRODUCTION DEVICE
DISPOSITIF DE FABRICATION DE FILAMENTS

(30) Priorität: 12.02.2016 DE 102016102494
(43) Veröffentlichungstag der Anmeldung: 19.12.2018
(73) Patentinhaber: Pall Corporation, Port Washington, NY 11050 (US)
(72) Erfinder: OECHSLE, Dietmar, 73529 Schwäbisch Gmünd (DE); DAHLBERG, Christian, 72658 Bempflingen (DE); MUELLER, Erik, 71726 Benningen (DE); WIETSCHORKE, Werner, 70192 Stuttgart (DE); KEY, Steffen, 71106 Magstadt (DE)
(74) Vertreter: Hoeger, Stellrecht & Partner Patentanwälte mbB
(86) Internationale Anmeldenummer: PCT/EP2017/053058
(87) Internationale Veröffentlichungsnummer: WO 2017/137593

(56) Entgegenhaltungen:
- WO-A1-2009/108138
- WO-A1-2017/109194
- WO-A2-2005/026398
- DE-A1- 2 103 769
- FR-A1- 2 682 969
- JP-A- S60 215 808
- WONJE JEONG ET AL: "Hydrodynamic microfabrication via "on the fly" photopolymerisation of microscale fibres and tubes", LAB ON A CHIP, ROYAL SOCIETY OF CHEMISTRY, Bd. 4, 11. November 2004 (2004-11-11), Seiten 576-580, XP002523006, ISSN: 1473-0197, DOI: 10.1039/B411249K [gefunden am 2004-11-11]

## Beschreibung

### Stand der Technik

Die Erfindung betrifft eine Filamentherstellvorrichtung nach dem Oberbegriff des Anspruchs 1 und ein Herstellungsverfahren mit einer Filamentherstellvorrichtung nach dem Oberbegriff des Anspruchs 9.

Es ist bereits eine Filamentherstellvorrichtung bekannt, welche zumindest eine Spinndüseneinheit aufweist und welche dazu vorgesehen ist, aus zumindest einer Polymerlösung zumindest ein Filament herzustellen, und eine Polymerisationseinheit umfasst, welche dazu vorgesehen ist, eine Polymerisation der Polymerlösung zu initiieren.

In der wissenschaftlichen Veröffentlichung von Wonje Jeong et al. "Hydrodynamic microfabrication via "on the fly" photopolymerisation of microscale fibres and tubes", LAB ON A CHIP, ROYAL SOCIETY OF CHEMISTRY, 2004, Bd. 4, Seiten 576-580, wird eine Vorrichtung zur Fertigung von Mikrofasern mit einer zylindrischen Polymerstruktur beschrieben. Zum Einsatz kommt dabei ein laminarer Strom, der im Durchgang in situ einer Photopolymerisation unterzogen wird.

Aus der WO 2009/108138 A1 ist ein Verfahren zur Herstellung von polymeren Hohlfasern mittels einem sogenannten hydrodynamischen Spinnprozess bekannt. Fluide werden durch eine Leitung geführt, um eine laminare Strömung mit drei oder mehr Lagen von im wesentlichen coaxialen Fluidströmungen zu bilden. Eine mittlere Lage umfasst einen vernetzbaren Polymerprecursor. Eine andere Lage umfasst ein Vernetzungsmittel. Der Polymerprecursor, das Vernetzungsmittel und die Fluide sind so ausgewählt, dass eine Diffusion des Polymerprecursors von der mittleren Lage weg vermieden wird und dass ein Teil des Vernetzungsmittels von einer der anderen Lagen in die mittlere Lage stattfinden kann, um die Vernetzung des Polymerprecursors in der mittleren Lage unter Bildung einer rohrförmigen Polymerlage in einer Polymerfaser zu erleichtern.

Aus der französischen Patentanmeldung FR 2 682 969 A1 ist ein Verfahren zur Faserherstellung, insbesondere von optischen Polymerfasern aus polymerisierbaren Materialien bekannt. Ein mittig bereitgestellter Strom an Monomer beinhaltet einen Initiator. Der Initiator diffundiert aus dem mittigen Strom in einen umgebenden Strom an Monomer und startet die Polymerisation des Monomeren.

Aus der WO 2005/026398 A2 ist eine Vorrichtung und ein Verfahren zur Herstellung von Nanofasern mittels reaktivem Elektrospinnverfahren bekannt. Das Elektrospinnverfahren ist mit einem Inline-Reaktor gekoppelt, in dem eine chemische oder photochemische Reaktion stattfindet.

Aus der DE 21 03 769 A1 ist ein Verfahren und eine Vorrichtung zum Herstellen von synthetischen Fäden- und Flächengebilden bekannt. Hierbei wird eine polymerisierbare und/oder vernetzbare Substanz, vorzugsweise kontinuierlich zu Fäden oder Flächengebilden mit Hilfe von energiereicher Strahlung, insbesondere Elektronenstrahlung, polymerisiert und/oder vernetzt.

Aus der japanischen Patentanmeldung JP S60 215808 A ist eine Spinnvorrichtung bekannt, bei der ein einen Materialfluss ausrichtendes Netzwerk zwischen einem Vorratstank und einer Spinndüse angeordnet ist, wobei eine erste Reaktionsröhre zwischen dem Netzwerk und der Spinndüse angeordnet ist und zweite Reaktionsröhre stromab von der Spinndüse vorgesehen ist, um die Herstellung von optischen Fasern zu ermöglichen, die frei sind von optischen Unregelmäßigkeiten. Die optischen Fasern können sowohl aus thermoplastischen Harzen als auch aus thermisch härtenden Harzen ausgebildet werden.

Aus der nachveröffentlichten WO 2017/109194 A1 ist eine Filtervorrichtung bekannt mit einem Filterelement mit einem integrierten Stabilisierungsmittel. Die Filtereinheit kann durch die Reaktivspinnen ausgebildet werden, wobei ein Photoaktivator, insbesondere durch Bestrahlung mit UV-Licht aktiviert wird.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale des Patentanspruchs 1 und 9 gelöst, während vorteilhafte Ausgestaltungen und Weiterbildungen der Erfindung den Unteransprüchen entnommen werden können.

### Vorteile der Erfindung

Diese Aufgabe wird von einer Filamentherstellvorrichtung mit den Merkmalen des Anspruchs 1 gelöst.

Die Erfindung geht aus von einer Filamentherstellvorrichtung, insbesondere Filamentreaktivspinnherstellvorrichtung, mit zumindest einer, vorzugsweise genau einer, Spinndüseneinheit, welche dazu vorgesehen ist, aus zumindest einer Polymerlösung und insbesondere zumindest aus einer weiteren Polymerlösung, bevorzugt mittels zumindest eines Innenfluids und besonders bevorzugt mittels zumindest eines weiteren Innenfluids, zumindest ein Filament, vorteilhaft in Reihenfertigung, herzustellen, und mit einer, vorzugsweise genau einer, Polymerisationseinheit, welche dazu vorgesehen ist, eine Polymerisation der Polymerlösung und insbesondere der weiteren Polymerlösung, bevorzugt mittels des Innenfluids und besonders bevorzugt mittels des weiteren Innenfluids zu initiieren.

Es wird vorgeschlagen, dass die Polymerisationseinheit dazu vorgesehen ist, die Polymerisation zumindest teilweise innerhalb der Spinndüseneinheit zu initiieren. Hierdurch kann das Filament, während sich dieses ausbildet durch die Polymerisation hydrophil funktionalisiert werden, wodurch Durchlaufzeiten bei einer Reihenfertigung verringert werden können. Es können höhere Anteile der in der Polymerlösung enthaltenen Polymere vernetzt werden, wodurch Materialkosten eingespart werden. Insbesondere können gezielt einzelne Eigenschaften des Filaments, wie beispielsweise die Funktionalisierung und vorteilhaft eine Morphologie des Filaments, angepasst werden, wodurch insbesondere eine Rautiefe des Filaments erhöht und damit eine Durchflussrate verbessert werden kann. Insgesamt kann also eine Effizienz, insbesondere eine Kosteneffizienz, vorzugsweise Zeiteffizienz und/oder Materialeffizienz bei der Herstellung, sowie insbesondere eine Produkteffizienz verbessert werden.

Unter einer "Filamentherstellvorrichtung", insbesondere einer Filamentreaktivspinnherstellvorrichtung, soll insbesondere eine Herstellvorrichtung verstanden werden, welche zumindest zur Herstellung eines Filaments, insbesondere mittels Reaktivspinnens, vorgesehen ist, wobei das Filament insbesondere zu einer Mikrofiltration, bevorzugt zu einer Ultrafiltration und besonders bevorzugt zu einer Nanofiltration, vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Filamentherstellvorrichtung kann insbesondere zu einem Nassspinnen des Filaments, vorzugsweise durch Phaseninversion, vorgesehen sein.

Unter "Reaktivspinnen" soll insbesondere ein Verfahren zum Herstellen von Filamenten verstanden werden, bei welchem die Polymerlösung, während einer Polymerisation der Polymerlösung versponnen wird. Unter einem "Filament" soll insbesondere ein längliches Objekt verstanden werden, dessen Längserstreckung einem mehrfachen, zumindest einem dreifachen, vorzugsweise zumindest einem sechsfachen und besonders bevorzugt einem zehnfachen eines Durchmessers des Objekts entspricht. Das Filament ist insbesondere dazu vorgesehen, eine Flüssigkeit mit einem darin gelösten Stoff aufzunehmen und den Stoff von der Flüssigkeit zumindest teilweise, insbesondere zumindest zu einem Großteil und besonders bevorzugt vollständig zu trennen, wobei das Filament vorteilhaft den getrennten Stoff aufnimmt und die Flüssigkeit passieren lässt. Das Filament weist insbesondere eine für eine Flüssigkeit teildurchlässige, insbesondere poröse Struktur, auf, welche vorzugsweise zumindest teilweise eine Membran ausbildet. Das Filament ist insbesondere als eine Hohlfaser und bevorzugt als eine Hohlfasermembran ausgebildet. Unter "einer Polymerlösung" soll insbesondere eine Lösung verstanden werden, welche zumindest ein Polymer und insbesondere ein weiteres Polymer, sowie zumindest ein Lösungsmittel für das zumindest eine und/oder für das zumindest eine weitere Polymer aufweist. Das Polymer ist insbesondere zur Ausbildung der Membran des Filaments vorgesehen ist. Das weitere Polymer ist insbesondere zur Ausbildung von Poren in der Membran des Filaments vorgesehen. Ferner ist das weitere Polymer durch Polymerisation dazu vorgesehen das Filament hydrophil zu funktionalisieren. Die Polymerlösung weist als Polymer insbesondere Polysulfon (PSU), Polyethersulfon (PES), Polyvinylidenfluorid (PVDF), Polyarylensulfon (PAS), und/oder Polyarylethersulfon (PAES) auf. Als weiteres Polymer weist die Polymerlösung insbesondere Polyvinylpyrrolidon (PVP) auf. Die Polymerlösung kann insbesondere weitere chemische Komponenten, wie beispielsweise Nicht-Lösungsmittel, Monomere, Co-Polymere, Prepolymere, Füllstoffe, Pigmente, Flammschutzmittel und/oder Polymerisationsinitiatoren umfassen. Unter "polymerisieren" soll insbesondere quervernetzen und vorteilhaft das Entstehen von zumindest mehreren Knotenpunkten und/oder Kreuzungspunkten verstanden werden. Unter dem Begriff "eine Polymerisation initiieren" soll insbesondere verstanden werden zumindest eine chemische Reaktion zu starten, welche eine Polymerisation zumindest mittelbar und vorteilhaft unmittelbar wenigstens eines Polymers der Polymerlösung, des Polymers und/oder des weiteren Polymers, auslöst. Unter "einem Polymerisationsinitiator" soll insbesondere ein Stoff verstanden werden, welcher dazu vorgesehen ist, zumindest eine chemische Reaktion zu starten, welche mittelbar und vorzugsweise unmittelbar eine Polymerisation wenigstens eines Polymers der Polymerlösung, vorteilhaft des Polymers und/oder des weiteren Polymers, auslöst. Unter "einem Innenfluid" soll insbesondere ein Fluid verstanden werden, welches zumindest ein Nicht-Lösungsmittel für das Polymer und/oder das weitere Polymer umfasst. Insbesondere kann das Innenfluid weitere chemische Komponenten, wie beispielsweise Lösungsmittel, Monomere, Co-Polymere, Prepolymere, Füllstoffe, Pigmente, Flammschutzmittel, Porenbildner und/oder Polymerisationsinitiatoren umfassen. Die Spinndüseneinheit weist insbesondere zumindest eine Spinndüse und insbesondere mehrere Spinndüsen auf, welche vorzugsweise zum Verspinnen der Polymerlösung vorgesehen ist. Die Polymerisationseinheit ist insbesondere zumindest teilweise und vorzugsweise zumindest zu einem Großteil und besonders bevorzugt vollständig einstückig mit der Spinndüseneinheit ausgebildet und/oder weiter vorteilhaft in dieser zumindest teilweise, insbesondere zu einem Großteil und besonders bevorzugt vollständig integriert. Unter "zumindest teilweise einstückig" soll in diesem Zusammenhang insbesondere verstanden werden, dass zumindest ein Bauteil zumindest eines Objekts, insbesondere das Objekt selbst, einstückig mit zumindest einem Bauteil zumindest eines weiteren Objekts, insbesondere dem weiteren Objekt selbst, einstückig ausgebildet ist. Unter "einstückig" soll in diesem Zusammenhang insbesondere zumindest stoffschlüssig verbunden verstanden werden, beispielsweise durch einen Schweißprozess, einen Klebeprozess, einen Anspritzprozess, und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, bevorzugt in einem Spritzgussverfahren, insbesondere einem Ein- und/oder Mehrkomponenten-Spritzgussverfahren, hergestellt.

Erfindungsgemäß umfasst die Polymerisationseinheit zumindest eine Bestrahlungseinheit, welche dazu vorgesehen ist, zumindest die Polymerlösung und gegebenenfalls die weitere Polymerlösung, das Innenfluid und/oder das weitere Innenfluid, innerhalb der Spinndüseneinheit, zur Initiation der Polymerisation mit elektromagnetischer Strahlung zu beaufschlagen. Die Bestrahlungseinheit ist insbesondere zumindest mit einer Strahlungsquelle verbunden und/oder weist vorteilhaft eine Strahlungsquelle auf, welche vorzugsweise zur Erzeugung der elektromagnetischen Strahlung vorgesehen ist. Die elektromagnetische Strahlung weist insbesondere ein Strahlungsspektrum und insbesondere ein Intensitätsmaximum des Strahlungsspektrum im Bereich der Ultravioletten-Strahlung (UV), insbesondere der Nahen UV-Strahlung (UV-A), der Mittleren UV-Strahlung (UV-B), der Fernen UV-Strahlung (UV-C-FUV), der Vakuum-UV-Strahlung (UV-C-VUV) und/oder der Extremen UV-Strahlung (EUV) auf. Vorteilhaft weist die elektromagnetische Strahlung insbesondere das Strahlungsspektrum und bevorzugt das Intensitätsmaximum des Strahlungsspektrums eine Energie insbesondere von minimal 3,2 eV, vorteilhaft von minimal 3,94 eV, weiter vorteilhaft von minimal 4,43 eV, bevorzugt von minimal 6,20 eV und besonders bevorzugt von minimal 10,25 eV und/oder insbesondere von maximal 124 eV, vorteilhaft von maximal 12,4 eV, weiter vorteilhaft von maximal 6,2 eV, bevorzugt von maximal 4,43 eV und besonders bevorzugt von maximal 3,94 eV auf. Weiter vorteilhaft weist die elektromagnetische Strahlung, insbesondere das Strahlungsspektrum und bevorzugt das Intensitätsmaximum des Strahlungsspektrum eine Wellenlänge von maximal 390 nm, vorteilhaft von maximal 315 nm, weiter vorteilhaft von maximal 280 nm, bevorzugt von maximal 200 nm und besonders bevorzugt von maximal 121 nm und/oder insbesondere von minimal 10 nm, vorteilhaft von minimal 100 nm, weiter vorteilhaft von minimal 200 nm, bevorzugt von minimal 280 nm und besonders bevorzugt von minimal 315 nm auf. Die elektromagnetische Strahlung weist insbesondere eine Leistungsdichte, insbesondere an einer Position, an welcher die elektromagnetische Strahlung in die Spinndüseneinheit einkoppelt und/oder bevorzugt an einer Position, an welcher die elektromagnetische Strahlung auf die Polymerlösung, die weitere Polymerlösung, das Innenfluid und/oder das weitere Innenfluid trifft, insbesondere von minimal 0,01 mW/cm², vorzugsweise von minimal 0,05 mW/cm² und besonders bevorzugt von minimal 0,2 mW/cm² und/oder insbesondere von maximal 5 mW/cm², vorzugsweise von maximal 2 mW/cm² und besonders bevorzugt von maximal 0,5 mW/cm² auf. Die Strahlungsquelle kann insbesondere als eine Gasentladungslampe, insbesondere Halogenmetalldampflampe, bevorzugt Quecksilberdampflampe, als ein Laser, eine Leuchtdiode und/oder als eine Laserdiode ausgebildet sein. Insbesondere ist die Bestrahlungseinheit zur, vorzugsweise zeitlichen, Variation zumindest einer Eigenschaft der elektromagnetischen Strahlung der Bestrahlungseinheit, wie beispielsweise des Strahlungsspektrums, insbesondere eines Intensitätsmaximums des Strahlungsspektrums, und/oder der Leistungsdichte der elektromagnetischen Strahlung, vorgesehen. Die Variation ist insbesondere verschieden von einem Ein- und/oder Ausschaltevorgang. Die Bestrahlungseinheit umfasst vorteilhaft zur Variation zumindest einer Eigenschaften der elektromagnetischen Strahlung insbesondere zumindest ein optisches Bauteil, wie beispielsweise zumindest einen optischen Frequenz-Filter, welcher insbesondere als Hochpass-Filter, Tiefpass-Filter und/oder Bandpass-Filter ausgebildet sein kann, zumindest eine Linse, zumindest einen Strahlteiler, zumindest einen Schwächer, zumindest einen Spiegel, zumindest ein Prisma und/oder zumindest einen optischen Modulator.

Es ist denkbar, dass die Spinndüseneinheit zur Beaufschlagung zumindest der Polymerlösung, der weiteren Polymerlösung, des Innenfluids und/oder des weiteren Innenfluids mit der elektromagnetischen Strahlung zumindest teilweise für die elektromagnetische Strahlung durchlässig ausgebildet ist. Die Spinndüseneinheit kann dazu insbesondere teilweise für die elektromagnetische Strahlung transparente Bauteile und/oder Öffnungen aufweisen. Um eine gezielte Polymerisation zu erreichen, wird jedoch vorgeschlagen, dass die Bestrahlungseinheit zumindest ein Strahlungsleitelement umfasst, welches dazu vorgesehen ist, die elektromagnetische Strahlung zumindest teilweise in die Spinndüseneinheit einzukoppeln. Das Strahlungsleitelement ist insbesondere dazu vorgesehen, die elektromagnetische Strahlung optisch zu übertragen. Das Strahlungsleitelement ist insbesondere als ein optischer Wellenleiter und vorzugsweise als eine optische Faser ausgebildet. Das Strahlungsleitelement ist insbesondere an und/oder in der Spinndüseneinheit angeordnet und bevorzugt zerstörungsfrei und besonders bevorzugt werkzeuglos lösbar mit der Spinndüseneinheit verbunden.

Vorteilhaft kann ein Brechungsindex des Strahlungsleitelements, oder einer dem Strahlungsleitelement nachgeschalteten Optik, zumindest im Wesentlichen identisch sein mit einem Brechungsindex des Innenfluids und/oder einem Brechungsindex der Polymerlösung. Darunter, dass "ein Brechungsindex im Wesentlichen identisch ist mit einem weiteren Brechungsindex", soll in diesem Zusammenhang insbesondere verstanden werden, dass sich die Brechungsindizes maximal um 25 %, vorzugsweise maximal um 10 %, bevorzugt maximal um 5 %, und besonders bevorzugt maximal um 1 % voneinander unterscheiden. Hierdurch kann insbesondere eine Einkopplung der elektromagnetischen Strahlung in die Polymerlösung und/oder das Innenfluid verbessert werden.

Ferner kann das Strahlungsleitelement eine konkave oder konvexe Spitze aufweisen, um vorteilhaft eine Einkopplung der elektromagnetischen Strahlung weiter zu verbessern. Alternativ oder zusätzlich kann auch eine dem Strahlungsleitelement nachgeschaltete Optik der Filamentherstellvorrichtung zur Einkopplung der elektromagnetischen Strahlung denkbar sein.

Um insbesondere eine Leitung der elektromagnetischen Strahlung innerhalb des Innenfluids zu verbessern, kann das Innenfluid einen Brechungsindex aufweisen, welcher größer, vorzugsweise wesentlich größer, ist als der Brechungsindex der Polymerlösung. Darunter, dass "ein Brechungsindex im Wesentlichen größer ist als ein weiterer Brechungsindex", soll in diesem Zusammenhang insbesondere verstanden werden, dass der Brechungsindex um zumindest 1 %, vorzugsweise um zumindest 5 %, bevorzugt um zumindest 15 % und besonders bevorzugt um zumindest 25 % größer ist als der weitere Brechungsindex. Hierdurch kann vorteilhaft eine Totalreflexion an einer Grenzfläche zwischen Polymerlösung und Innenfluid erzielt werden, sodass das Innenfluid und die Polymerlösung ein flüssiges Strahlungsleitelement ausbilden.

Alternativ kann, um eine Leitung der Strahlung innerhalb der Polymerlösung zu verbessern, die Polymerlösung einen Brechungsindex aufweisen, welcher größer, vorzugsweise wesentlich größer, ist als der Brechungsindex des Innenfluids und vorzugsweise ein Brechungsindex einer Umgebung. Hierdurch kann vorteilhaft eine Totalreflexion an einer Grenzfläche zwischen Polymerlösung und einer Umgebung erzielt werden, sodass das Innenfluid und die Polymerlösung ein flüssiges Strahlungsleitelement ausbilden.

Das Strahlungsleitelement kann insbesondere zumindest teilweise innerhalb zumindest einer Spinndüsenwandung der Spinndüseneinheit angeordnet sein. Ferner kann eine Haupterstreckung des Strahlungsleitelements innerhalb der Spinndüseneinheit zumindest im Wesentlichen parallel und/oder zumindest im Wesentlichen senkrecht zu einer Flussrichtung des Innenfluids und/oder der Polymerlösung und/oder zur Haupterstreckung des Innenfluidkanals und/oder des Polymerlösungskanals sein. Die Spinndüsenwandung weist insbesondere einen Aufnahmekanal für das Strahlungsleitelement auf. Vorzugsweise kann die Spinndüsenwandung zumindest teilweise aus einem transparenten Material, wie beispielsweise einem Kunststoff, sowie insbesondere zumindest teilweise aus einem reflektierenden Material, wie beispielsweise einem Metall, bestehen, so dass elektromagnetische Strahlung, welche von dem flüssigen Strahlungsleitelement eingekoppelt wird, an einer Grenzfläche zwischen dem transparenten und dem refraktären Material in Richtung der Polymerlösung und/oder des Innenfluids reflektiert wird. Ferner ist denkbar, dass das flüssige Strahlungsleitelement einen zumindest teilweise gebogenen Verlauf insbesondere innerhalb der Spinndüsenwandung aufweist und vorzugsweise zur Polymerlösung und/oder zum Innenfluid hin gebogen ist.

Das Strahlungsleitelement kann insbesondere zur Einkopplung von elektromagnetischer Strahlung in das Innenfluid und/oder in die Polymerlösung vorgesehen sein. Vorteilhaft kann bei der Einkopplung der elektromagnetischen Strahlung in das Innenfluid eine Oberfläche des Filaments funktionalisiert werden. Ferner kann vorteilhaft durch Einkopplung der elektromagnetischen Strahlung in die Polymerlösung einer Strukturierung des Filaments verbessert werden.

Weiter wird vorgeschlagen, dass die Spinndüseneinheit zumindest einen Innenfluidkanal, welcher zur Leitung eines Innenfluids, insbesondere des zuvor genannten Innenfluids, vorgesehen ist und wenigstens einen Polymerlösungskanal, welcher zur Leitung der Polymerlösung vorgesehen ist, aufweist, wobei der Polymerlösungskanal den Innenfluidkanal in zumindest einem Querschnitt, insbesondere in Umfangsrichtung, wenigstens teilweise, bevorzugt zumindest zu einem Großteil und besonders bevorzugt vollständig, umgreift. Hierdurch kann eine Morphologie des Filaments auf einfache Art und Weise und vorteilhaft kostengünstig variiert werden.

Es ist denkbar, dass die Spinndüseneinheit zumindest einen weiteren Polymerlösungskanal, welcher zur Leitung der weiteren Polymerlösung vorgesehen ist und/oder zumindest einen weiteren Innenfluidkanal, welcher zur Leitung des weiteren Innenfluids vorgesehen ist, aufweist. Die Polymerlösungskanäle und/oder die Innenfluidkanäle können insbesondere in verschiedenen Kombinationen zueinander angeordnet sein und sich vorteilhaft, in zumindest einem Querschnitt, insbesondere in Umfangsrichtung, wenigstens teilweise, bevorzugt zumindest zu einem Großteil und besonders bevorzugt vollständig, umgreifen. Insbesondere können die Polymerlösungskanäle vorteilhaft zur Leitung der gleichen Polymerlösung und/oder die Innenfluidkanäle vorteilhaft zur Leitung des gleichen Innenfluids vorgesehen sein. Um eine vielschichtige Morphologie des Filaments zu erzielen und insbesondere eine Stabilität des Filaments besonders kostengünstig zu verbessern, wird vorgeschlagen, dass die Spinndüseneinheit zumindest einen weiteren Polymerlösungskanal aufweist, wobei der Polymerlösungskanal und der weitere Polymerlösungskanal zur Leitung verschiedener Polymerlösungen vorgesehen sind. Unter "verschiedenen Polymerlösungen" sollen insbesondere Polymerlösungen verstanden werden, welche sich zumindest durch eine chemische Komponente, vorteilhaft zumindest ein Polymer, voneinander unterscheiden. Die Polymerlösung weist insbesondere zumindest eine chemische Komponente auf, insbesondere ein Polymer, von welcher die weitere Polymerlösung frei ist oder vice versa. Die weitere Polymerlösung weist bevorzugt Polyvinylidenfluorid (PVDF) auf, während die Polymerlösung frei von Polyvinylidenfluorid (PVDF) ist. Ferner weist die Polymerlösung Polyethersulfon (PES) auf, während die weitere Polymerlösung frei von Polyethersulfon (PES) ist. Ferner kann die Spinndüseneinheit zumindest einen weiteren Innenfluidkanal aufweisen, wobei der Innenfluidkanal und der weitere Innenfluidkanal zur Leitung verschiedener Innenfluide vorgesehen sind. Unter "verschiedenen Innenfluiden" sollen insbesondere Innenfluide verstanden werden, welche sich zumindest durch eine chemische Komponente, insbesondere ein Nicht-Lösungsmittel, voneinander unterscheiden.

In einer bevorzugten Ausgestaltung der Erfindung wird vorgeschlagen, dass die Bestrahlungseinheit dazu vorgesehen ist, die elektromagnetische Strahlung zumindest teilweise in zumindest einen Kanal, vorzugsweise den Polymerlösungskanal, insbesondere in mehrere Kanäle, vorzugsweise in den Polymerlösungskanal, den weiteren Polymerlösungskanal, den Innenfluidkanal und/oder den weiteren Innenfluidkanal der Spinndüseneinheit einzukoppeln. Hierdurch kann eine Präzision der Einkopplung der elektromagnetischen Strahlung weiter verbessert werden. Die Bestrahlungseinheit weist insbesondere je Kanal zumindest ein Strahlungsleitelement und insbesondere mehrere Strahlungsleitelemente auf. Das Strahlungsleitelement ist an und/oder in dem Kanal angeordnet. Das Strahlungsleitelement ist insbesondere zerstörungsfrei und vorteilhaft werkzeugfrei lösbar an dem Kanal befestigt. Ferner ist es denkbar, dass das Strahlungsleitelement an dem Kanal geflanscht und/oder besonders bevorzugt in den Kanal eingeklebt ist.

Die Filamentherstellvorrichtung weist ferner eine Temperiereinheit auf. Die Temperiereinheit ist insbesondere dazu vorgesehen, eine Temperatur zumindest der Polymerlösung zu variieren, wodurch insbesondere eine Viskosität der Polymerlösung einstellbar ist. Ferner wird vorgeschlagen, dass die Polymerisationseinheit eine Temperiereinheit, insbesondere die zuvor erwähnte Temperiereinheit, aufweist, welche dazu vorgesehen ist, zumindest die Polymerlösung, die weitere Polymerlösung, das Innenfluid und/oder das weitere Innenfluid, zur Initiation der Polymerisation mit Wärmeenergie zu beaufschlagen. Hierdurch kann eine vorteilhaft gleichmäßige Initiation der Polymerisation erfolgen. Die Wärmeenergie entspricht insbesondere einer Temperatur zumindest der Polymerlösung, der weiteren Polymerlösung, des Innenfluids und/oder des weiteren Innenfluids von minimal -5°C, vorzugsweise von minimal 5°C und besonders bevorzugt von minimal 30°C und/oder insbesondere von maximal 200°C, vorzugsweise von maximal 150°C und besonders bevorzugt von maximal 100°C. Die Temperiereinheit kann insbesondere als ein Thermocryostat ausgebildet sein. Vorzugsweise weist die Temperiereinheit zumindest ein Temperierelement auf, welches dazu vorgesehen ist Wärmeenergie aufzunehmen und abzugeben. Das Temperierelement ist insbesondere als ein Radiator ausgebildet. Die Temperiereinheit, insbesondere das Temperierelement, ist zumindest teilweise einstückig mit der Spinndüseneinheit ausgebildet. Ferner weist die Temperatureinheit eine Wärmeenergiequelle auf, welche zur Wärmeenergieübertragung mit dem Temperierelement verbunden ist. Es ist insbesondere denkbar, dass die Wärmeenergiequelle und das Temperierelement zumindest teilweise einstückig ausgebildet sind.

Des Weiteren wird vorgeschlagen, dass die Polymerisationseinheit zumindest eine Zufuhreinheit umfasst, welche dazu vorgesehen ist, zumindest einem Kanal, insbesondere zumindest mehreren Kanäle, vorzugsweise dem Polymerlösungskanal, dem weiteren Polymerlösungskanal, dem Innenfluidkanal und/oder dem weiteren Innenfluidkanal, der Spinndüseneinheit zumindest einen Polymerisationsinitiator, insbesondere mittelbar und besonders bevorzugt unmittelbar, zuzuführen. Hierdurch kann vermieden werden, dass die Polymerisation der Polymerlösung vor der Spinndüse initiiert wird. Die Zuführeinheit weist zumindest eine Zufuhrleitung, insbesondere je Kanal der Spinndüseneinheit je zumindest eine Zufuhrleitung, für den Polymerisationsinitiator auf. Bei dem Polymerisationsinitiator kann es sich insbesondere um einen Radikalstarter, wie beispielsweise Peroxid, tert-Butylperoxypivalat und/oder H₂O₂/CuCl₂ handeln. Ferner kann der Polymerisationsinitiator insbesondere ein Photoinitiator sein, wie beispielsweise 4,4,'-Diazidostilben-2,2'-Dinatriumsulfonat. Insbesondere ist die elektromagnetische Strahlung, bevorzugt deren Strahlungsspektrum und besonders bevorzugt das Intensitätsmaximum des Strahlungsspektrums so gewählt, dass dieses mit einem Absorptionsspektrum des Polymerisationsinitiators zumindest teilweise, insbesondere zumindest zu einem Großteil und besonders bevorzugt vollständig übereinstimmt. Beispielsweise liegt das Absorptionsspektrum von 4,4,'-Diazidostilben-2,2'-Dinatriumsulfonat in einem Spektralbereich von 350 nm bis 390 nm. Ferner ist insbesondere eine Leistungsdichte der elektromagnetischen Strahlung so gewählt, dass diese zumindest zur Aktivierung des Polymerisationsinitiators genügt. Beispielsweise liegt die Leistungsdichte zur Aktivierung für 4,4,'-Diazidostilben-2,2'-Dinatriumsulfonat in einem Leistungsbereich von 0,2 mW/cm² bis 0,5 mW/cm². Ferner ist insbesondere eine Wärmeenergie, insbesondere eine Temperatur, der Spinndüseneinheit und/oder der Polymerlösung sowie insbesondere des Innenfluids so gewählt, dass diese zumindest zur Aktivierung des Polymerisationsinitiators genügt und vorteilhaft der Zersetzungstemperatur des Polymerisationsinitiators entspricht. Beispielsweise liegt die Wärmeenergie zur Aktivierung von Peroxid in einem Temperatur Bereich von 70°C bis 90°C.

Um eine variable Herstellung des Filaments zu verbessern und insbesondere eine Anpassung der Produktionsparameter an äußere Bedingungen zu ermöglichen, um insbesondere eine gleichbleibende Qualität des Filaments zu erhalten, wird vorgeschlagen, dass die Filamentherstellvorrichtung eine Steuereinheit aufweist, welche dazu vorgesehen ist, die Polymerisationseinheit zur gezielten Initiation der Polymerisation zu steuern. Unter einer "Steuereinheit" soll insbesondere eine elektronische Einheit verstanden werden, die vorzugsweise dazu vorgesehen ist, zumindest die einen Betriebsparameter der Polymerisationseinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter "einem Betriebsparameter" der Polymerisationseinheit soll insbesondere eine Eigenschaft der elektromagnetischen Strahlung, wie beispielsweise das Strahlungsspektrum, die Intensität und insbesondere deren zeitlicher Verlauf, eine Eigenschaft der Temperiereinheit, wie beispielsweise die Wärmeenergie, insbesondere Temperatur und vorteilhaft deren zeitlicher Verlauf und/oder eine Herstellungseigenschaft, wie beispielsweise eine Durchflussgeschwindigkeit der Polymerlösung, der weiteren Polymerlösung, des Innenfluids und/oder des weiteren Innenfluids durch die Spinndüseneinheit und/oder ein Stoffmengenverhältnis, insbesondere des Polymers der Polymerlösung und des Polymerisationsinitiators, verstanden werden.

Weiterhin geht die Erfindung aus von einem Herstellungsverfahren gemäß Anspruch 9, insbesondere einem Reaktivspinnherstellungsverfahren, mit einer Filamentherstellvorrichtung, welche eine Spinndüseneinheit aufweist, wobei mittels der Spinndüseneinheit aus zumindest einer

Polymerlösung zumindest ein Filament hergestellt wird, wobei eine Polymerisation zumindest teilweise innerhalb der Spinndüseneinheit initiiert wird. Hierdurch kann eine Effizienz, insbesondere eine Kosteneffizienz, vorzugsweise Zeiteffizienz und/oder Materialeffizienz bei der Herstellung, sowie insbesondere eine Produkteffizienz verbessert werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Anlage zur Herstellung eines Filaments mit einer Filamentherstellvorrichtung in einer schematischen Seitenansicht,
- Fig. 2: einen Teil der Filamentherstellvorrichtung in einer Schnittansicht,
- Fig. 3: ein schematischer Ablaufplan eines Verfahrens zur Herstellung des Filaments mit der Filamentherstellvorrichtung,
- Fig. 4: ein weiteres Ausführungsbeispiel eines Teils einer Filamentherstellvorrichtung in einer schematischen Darstellung,
- Fig. 5: einen Teil der Filamentherstellvorrichtung aus Figur 4 in einer Schnittansicht,
- Fig. 6: ein alternatives Ausführungsbeispiel eines Teils einer Filamentherstellvorrichtung in einer schematischen Darstellung,
- Fig. 7: einen Teil der Filamentherstellvorrichtung aus Figur 6 in einer Schnittansicht,
- Fig. 8: ein weiteres Ausführungsbeispiel eines Teils einer Filamentherstellvorrichtung in einer Schnittansicht,
- Fig. 9: einen Teil der Filamentherstellvorrichtung aus Figur 8 in einer Draufsicht,
- Fig. 10: ein weiteres Ausführungsbeispiel eines Teils einer Filamentherstellvorrichtung in einer Schnittansicht,
- Fig. 11: ein weiteres Ausführungsbeispiel eines Teils einer Filamentherstellvorrichtung in einer Schnittansicht und
- Fig. 12: einen Teil der Filamentherstellvorrichtung aus Figur 11 in einer Draufsicht.

### Beschreibung der Ausführungsbeispiele

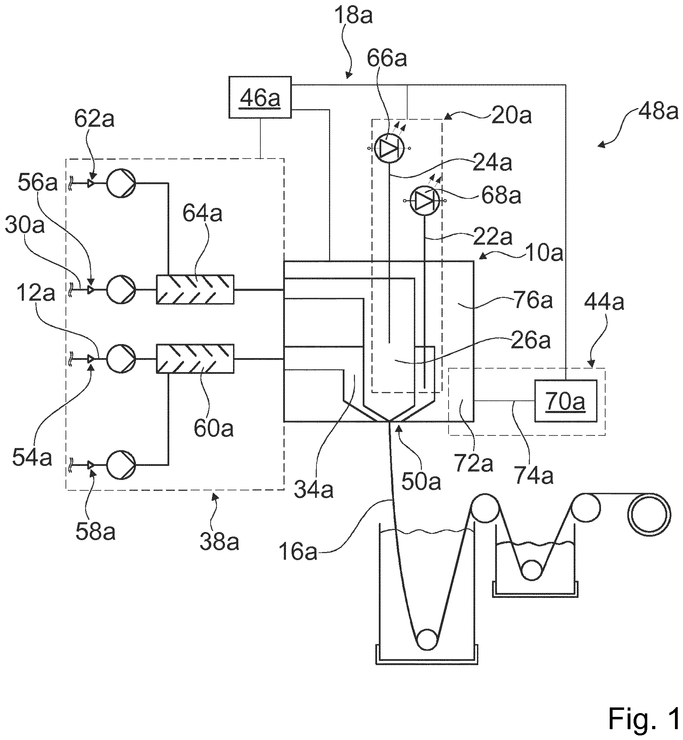

Figur 1 zeigt einen schematischen Aufbau einer Anlage 48a zur Herstellung eines Filaments 16a mit einer als Filamentreaktivspinnherstellvorrichtung ausgebildeten Filamentherstellvorrichtung. Die Filamentherstellvorrichtung stellt das Filament 16a in einem Betriebszustand in Reihenfertigung her. Die Filamentherstellvorrichtung bildet das Filament 16a in einem Betriebszustand als eine Hohlfasermembran aus.

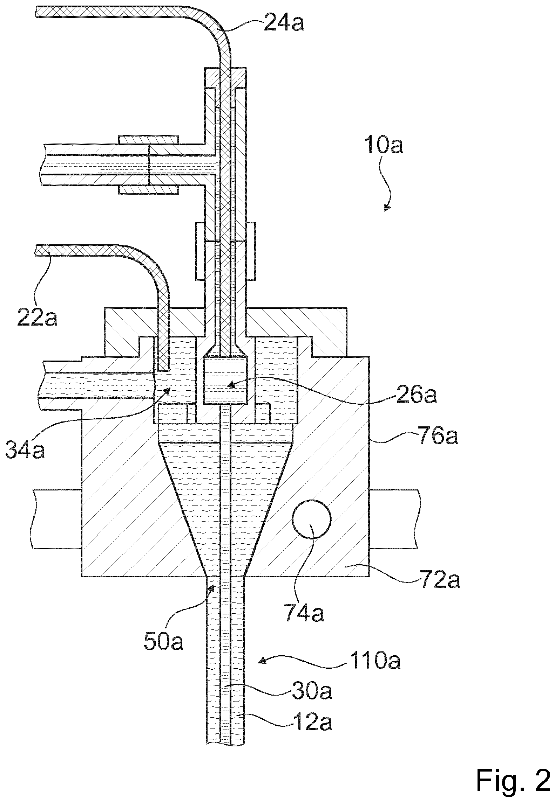

Die Filamentherstellvorrichtung weist eine Spinndüseneinheit 10a auf (siehe Figur 2). Die Spinndüseneinheit 10a stellt das Filament 16a in einem Betriebszustand kontinuierlich her. Die Spinndüseneinheit 10a stellt in einem Betriebszustand das Filament 16a aus einer Polymerlösung 12a her. Im vorliegenden Fall stellt die Spinndüseneinheit 10a in einem Betriebszustand das Filament 16a zudem mittels eines Innenfluids 30a her. Es ist jedoch auch denkbar, dass die Spinndüseneinheit 10a das Filament 16a aus zumindest einer weiteren Polymerlösung und/oder zumindest einem weiteren Innenfluid herstellen kann.

Die Polymerlösung 12a weist zumindest ein Polymer auf. Das Polymer bildet in einem Betriebszustand das Filament 16a aus. Das Polymer ist Polyethersulfon (PES). Die Polymerlösung 12a kann alternativ oder zusätzlich als Polymer Polysulfon (PSU), Polyethersulfon (PES), Polyvinylidenfluorid (PVDF), Polyarylensulfon (PAS), und/oder Polyarylethersulfon (PAES) aufweisen. Ferner weist die Polymerlösung 12a zumindest ein weiteres Polymer auf. Das weitere Polymer ist ein Porenbildner. Das weitere Polymer bildet in einem Betriebszustand Poren innerhalb des Filaments 16a aus. Das weitere Polymer funktionalisiert in einem Betriebszustand durch Polymerisation das Filament 16a hydrophil. Im vorliegenden Fall ist das weitere Polymer ist Polyvinylpyrrolidon (PVP). Es ist jedoch auch denkbar, dass das weitere Polymer ein anderer Porenbildner ist, welcher einem Fachmann vorteilhaft erscheint. Zudem weist die Polymerlösung 12a ein Lösungsmittel auf. Das Lösungsmittel ist ein Lösungsmittel für zumindest eines der Polymere. Im vorliegenden Fall ist das Lösungsmittel ein Lösungsmittel für das Polymer und das weitere Polymer. Ferner ist es denkbar, dass die Polymerlösung 12a weitere chemische Komponenten aufweisen kann, wie beispielsweise Nicht-Lösungsmittel, Monomere, Co-Polymere, Prepolymere, Füllstoffe, Pigmente, Flammschutzmittel und/oder Polymerisationsinitiatoren.

Das Innenfluid 30a umfasst zumindest ein Nicht-Lösungsmittel. Das Nicht-Lösungsmittel ist ein Nicht-Lösungsmittel für zumindest eines der Polymere der Polymerlösung 12a enthaltenen Polymere. Ferner ist denkbar, dass das Innenfluid 30a weitere chemische Komponenten aufweisen kann, wie beispielsweise Lösungsmittel, Monomere, Co-Polymere, Prepolymere, Füllstoffe, Pigmente, Flammschutzmittel, Porenbildner und/oder Polymerisationsinitiatoren.

Die Spinndüseneinheit 10a weist zumindest eine Spinndüse 50a auf. Die Spinndüse 50a verspinnt in einem Betriebszustand die Polymerlösung 12a. Die Spinndüseneinheit 10a weist einen Polymerlösungskanal 34a auf. Der Polymerlösungskanal 34a leitet in einem Betriebszustand die Polymerlösung 12a. Ferner weist die Spinndüseneinheit 10a einen Innenfluidkanal 26a auf. Der Innenfluidkanal 26a leitet in einem Betriebszustand das Innenfluid 30a. Der Polymerlösungskanal 34a umgreift den Innenfluidkanal 26a in einem Querschnitt zumindest teilweise. Der Polymerlösungskanal 34a umgreift den Innenfluidkanal 26a in Umfangsrichtung zumindest teilweise. Der Polymerlösungskanal 34a bildet zumindest teilweise die Spinndüse 50a aus. Der Innenfluidkanal 26a bildet zumindest teilweise die Spinndüse 50a aus. Zusätzlich oder alternativ kann die Spinndüseneinheit 10a zumindest einen weiteren Polymerlösungskanal und/oder zumindest einen weiteren Innenfluidkanal aufweisen, welcher zumindest im Wesentlichen äquivalent zu dem Polymerlösungskanal und/oder dem Innenfluidkanal ausgebildet sind. Die Polymerlösungskanäle und/oder die Innenfluidkanäle können dann in verschiedene Kombinationen zueinander angeordnet werden. Denkbar ist, dass die Polymerlösungskanäle und die Innenfluidkanäle sich in zumindest einem Querschnitt, insbesondere in Umfangsrichtung, wenigstens teilweise umgreifen. Insbesondere können die Polymerlösungskanäle und/oder die Innenfluidkanäle vorteilhaft zur Leitung der gleichen Polymerlösung und/oder des gleichen Innenfluids vorgesehen sein. Alternativ oder zusätzlich können die Polymerlösungskanäle vorteilhaft zur Leitung verschiedener Polymerlösungen und/oder die Innenfluidkanäle vorteilhaft zur Leitung verschiedener Innenfluide vorgesehen sein.

Die Filamentherstellvorrichtung weist eine Polymerisationseinheit 18a auf. Die Polymerisationseinheit 18a ist zumindest teilweise einstückig mit der Spinndüseneinheit 10a ausgebildet. Die Polymerisationseinheit 18a ist zumindest teilweise in die Spinndüseneinheit 10a integriert. Die Polymerisationseinheit 18a initiiert in dem Betriebszustand die Polymerisation der Polymerlösung 12a innerhalb der Spinndüseneinheit 10a.

Die Zufuhreinheit 38a weist eine Polymerlösungszufuhrleitung 54a auf. Die Polymerlösungszufuhrleitung 54a ist mit dem Polymerlösungskanal 34a der Spinndüseneinheit 10a verbunden. Ferner weist die Zufuhreinheit 38a eine Innenfluidzufuhrleitung 56a auf. Die Innenfluidzufuhrleitung 56a ist mit dem Innenfluidkanal 26a der Spinndüseneinheit 10a verbunden.

In einem Betriebszustand führt die Zufuhreinheit 38a dem Polymerlösungskanal 34a den Polymerisationsinitiator zu. Die Zufuhreinheit 38a weist eine Polymerisationsinitiatorzufuhrleitung 58a für den Polymerisationsinitiator auf. Die Polymerisationsinitiatorzufuhrleitung 58a ist mit dem Polymerlösungskanal 34a der Spinndüseneinheit 10a verbunden. Der Polymerisationsinitiator wird der Polymerlösung 12a zugeführt. Nach dem Zuführen des Polymerisationsinitiators zur Polymerlösung 12a ist der Polymerisationsinitiator ein Bestandteil der Polymerlösung 12a. Die Zufuhreinheit 38a weist einen Mischer 60a auf. Der Mischer 60a vermischt in einem Betriebszustand die Polymerlösung 12a und den Polymerisationsinitiator. Die Polymerlösungszufuhrleitung 54a ist mit dem Mischer 60a verbunden. Die Polymerisationsinitiatorzufuhrleitung 58a ist mit dem Mischer 60a verbunden. Der Mischer 60a ist mit dem Polymerlösungskanal 34a der Spinndüseneinheit 10a verbunden. Der Mischer 60a ist als ein statischer Mischer ausgebildet. Um eine besonders kompakte Ausgestaltung zu erreichen, könnte ferner der Mischer 60a in die Spinndüseneinheit 10a integriert sein. Insbesondere könnte der Polymerlösungskanal 34a der Spinndüseneinheit 10a zumindest teilweise den Mischer 60a ausbilden. Im vorliegenden Fall ist die Polymerisationsinitiatorzufuhrleitung 58a mittelbar mit dem Polymerlösungskanal 34a verbunden. Alternativ kann die Polymerisationsinitiatorzufuhrleitung 58a unmittelbar mit dem Polymerlösungskanal 34a verbunden sein.

Ferner führt in einem Betriebszustand die Zufuhreinheit 38a dem Innenfluidkanal 26a den Polymerisationsinitiator zu. Nach dem Zuführen des Polymerisationsinitiators zum

Innenfluid 30a ist der Polymerisationsinitiator ein Bestandteil des Innenfluids 30a. Die Zufuhreinheit 38a weist eine weitere Polymerisationsinitiatorzufuhrleitung 64a für den Polymerisationsinitiator auf. Die weitere Polymerisationsinitiatorzufuhrleitung 64a ist mit dem Innenfluidkanal 26a der Spinndüseneinheit 10a verbunden. Der Polymerisationsinitiator wird dem Innenfluid 30a zugeführt. Die Zufuhreinheit 38a weist einen weiteren Mischer 64a auf. Der weitere Mischer 64a vermischt in einem Betriebszustand das Innenfluid 30a und den Polymerisationsinitiator. Die Innenfluidzufuhrleitung 56a ist mit dem weiteren Mischer 64a verbunden. Die weitere Polymerisationsinitiatorzufuhrleitung 62a ist mit dem weiteren Mischer 64a verbunden. Der weitere Mischer 64a ist mit dem Innenfluidkanal 26a der Spinndüseneinheit 10a verbunden. Der weitere Mischer 64a ist als ein statischer Mischer ausgebildet. Um eine besonders kompakte Ausgestaltung zu erreichen, könnte ferner der Mischer 64a in die Spinndüseneinheit 10a integriert sein. Insbesondere könnte der Innenfluidkanal 26a der Spinndüseneinheit 10a zumindest teilweise den Mischer 64a ausbilden. Im vorliegenden Fall ist die weitere Polymerisationsinitiatorzufuhrleitung 62a mittelbar mit dem Innenfluidkanal 26a verbunden. Alternativ kann die Polymerisationsinitiatorzufuhrleitung 58a unmittelbar mit dem Innenfluidkanal 26a verbunden sein. Es ist insbesondere vorstellbar, dass zumindest auf einen der Mischer 60a, 64a, insbesondere auf den weiteren Mischer 64a verzichtet werden kann.

Denkbar ist, dass die Zufuhreinheit 38a dazu vorgesehen ist, nur dem Polymerlösungskanal 34a den Polymerisationsinitiator zuzuführen. Alternativ ist es jedoch auch vorstellbar, dass die Zufuhreinheit 38a dazu vorgesehen ist, nur dem Innenfluidkanal 26a den Polymerisationsinitiator zuzuführen. Ferner ist denkbar, dass die Zuführeinheit 38a dem Polymerlösungskanal 34a und dem Innenfluidkanal 26a verschiedene Polymerisationsinitiatoren zuführt.

Zur Zuführung der Polymerlösung 12a, des Innenfluids 30a und/oder des Polymerisationsinitiators weist die Zufuhreinheit 38a zumindest eine, insbesondere jeweils eine, Pumpe auf. Ferner kann die Zufuhreinheit 38a zumindest einen Filter aufweisen. Der Filter filtert in einem Betriebszustand ungelöste Bestandteile der Polymerlösung und/oder des Innenfluids heraus.

Der Polymerisationsinitiator ist im vorliegenden Fall ein Photoinitiator. Bei dem Photoinitiator handelt es sich um 4,4,'-Diazidostilben-2,2'-Dinatriumsulfonat. Es ist jedoch - 17-auch denkbar, dass der Polymerisationsinitiator als ein Radikalstarter ausgebildet ist. Bei dem Radikalstarter kann es sich beispielsweise um Peroxid, tert-Butylperoxypivalat und/oder H₂O₂/CuCl₂ handeln.

Die Polymerisationseinheit 18a umfasst zumindest eine Bestrahlungseinheit 20a. Die Bestrahlungseinheit 20a beaufschlagt in zumindest einem Betriebszustand die Polymerlösung 12a, insbesondere den, vorzugsweise in der Polymerlösung 12a enthaltenen, Polymerisationsinitiator, zur Initiation der Polymerisation mit elektromagnetischer Strahlung. Ferner beaufschlagt die Bestrahlungseinheit 20a in einem Betriebszustand das Innenfluid 30a, insbesondere den, vorzugsweise in dem Innenfluid 30a enthaltenen, Polymerisationsinitiator, zur Initiation der Polymerisation mit elektromagnetischer Strahlung. Alternativ kann die Bestrahlungseinheit 12a dazu vorgesehen sein, nur die Polymerlösung 12a oder das Innenfluid 30a mit elektromagnetischer Strahlung zu beaufschlagen. Die Bestrahlungseinheit 20a beaufschlagt die Polymerlösung 12a und/oder das Innenfluid 30a mit elektromagnetischer Strahlung nachdem diese mit dem Polymerisationsinitiator vermischt wurden.

Die Bestrahlungseinheit 20a weist zumindest eine Strahlungsquelle 66a, 68a auf. Im vorliegenden Fall weist die Bestrahlungseinheit 20a je Kanal 26a, 34a der Spinndüseneinheit 10a eine Strahlungsquelle 66a, 68a auf. Die Bestrahlungseinheit 20a weist für den Innenfluidkanal 26a eine Strahlungsquelle 66a auf. Die Bestrahlungseinheit 20a weist für den Polymerlösungskanal 34a eine Strahlungsquelle 68a auf. Die Strahlungsquellen 66a, 68a sind zumindest im Wesentlichen äquivalent zueinander ausgebildet. Deshalb wird im Folgenden nur eine Strahlungsquelle 66a beschrieben. Wobei die folgende Beschreibung grundsätzlich auch auf die Strahlungsquelle 68a übertragen werden kann. Es ist jedoch auch denkbar, dass die Strahlungsquellen 66a, 68a voneinander verschieden ausgebildet sind und sich beispielsweise durch ein Strahlungsspektrum der elektromagnetischen Strahlung unterscheiden.

Die Strahlungsquelle 66a ist als eine Laserdiode ausgebildet. Es ist jedoch auch denkbar, dass die Strahlungsquelle 66a als eine Gasentladungslampe, insbesondere Halogenmetalldampflampe, bevorzugt Quecksilberdampflampe, als ein Laser und/oder als eine Leuchtdiode ausgebildet sein kann. Die Strahlungsquelle 66a erzeugt in einem Betriebszustand die elektromagnetische Strahlung. Die elektromagnetische Strahlung weist ein Strahlungsspektrum mit einem Intensitätsmaximum im Bereich der Ultravioletten-Strahlung auf. Das Intensitätsmaximum des Strahlungsspektrums der elektromagnetischen Strahlung ist so gewählt, dass dieses mit einem Absorptionsspektrum des Polymerisationsinitiators zumindest teilweise übereinstimmt. Im vorliegenden Fall weist die elektromagnetische Strahlung ein Strahlungsspektrum mit einem Intensitätsmaximum im Bereich der Nahen UV-Strahlung auf. Es ist jedoch auch denkbar, dass die elektromagnetische Strahlung ein Strahlungsspektrum mit einem Intensitätsmaximum im Bereich der Nahen UV-Strahlung (UV-A), der Mittleren UV-Strahlung (UV-B), der Fernen UV-Strahlung (UV-C-FUV), der Vakuum-UV-Strahlung (UV-C-VUV) und/oder der Extremen UV-Strahlung (EUV) aufweist. Das Intensitätsmaximum des Strahlungsspektrums der elektromagnetischen Strahlung weist eine Energie von minimal 3,2 eV auf. Das Intensitätsmaximum des Strahlungsspektrums der elektromagnetischen Strahlung weist eine Energie von maximal 3,94 eV auf. Ferner weist das Intensitätsmaximum des Strahlungsspektrums der elektromagnetischen Strahlung eine Wellenlänge von maximal 390 nm auf. Ferner weist das Intensitätsmaximum des Strahlungsspektrums der elektromagnetischen Strahlung eine Wellenlänge von minimal 350 nm auf. Eine Leistungsdichte der elektromagnetischen Strahlung ist so gewählt, dass dieses zumindest zur Aktivierung des Polymerisationsinitiators genügt. Die elektromagnetische Strahlung weist an der Position, an welcher die elektromagnetische Strahlung in die Spinndüseneinheit 10a einkoppelt, eine Leistungsdichte von minimal 0,2 mW/cm² auf. Die elektromagnetische Strahlung weist an der Position, an welcher die elektromagnetische Strahlung in die Spinndüseneinheit 10a einkoppelt, eine Leistungsdichte von maximal 0,5 mW/cm² auf.

Die Bestrahlungseinheit 20a kann insbesondere zur Variation einer Eigenschaft der elektromagnetischen Strahlung weitere optische Bauteile aufweisen. Die Variation der Eigenschaft der elektromagnetischen Strahlung erfolgt zeitlich. Die zu variierende Eigenschaft der elektromagnetischen Strahlung ist beispielsweise ein Intensitätsmaximum des Strahlungsspektrums. Zur Variation des Intensitätsmaximums des Strahlungsspektrums weist die Bestrahlungseinheit 20a im vorliegenden Fall einen Shutter, einen Schwächer und/oder einen optischen Filter auf (nicht dargestellt). Der optische Filter kann dabei beispielsweise als ein Hochpass-Filter, Tiefpass-Filter und/oder Bandpass-Filter ausgebildet sein. Ferner können auch weitere Eigenschaften der elektromagnetischen Strahlung, wie beispielsweise eine Leistungsdichte, mittels weiterer optischer Elemente variiert werden. Die Bestrahlungseinheit 20a kann weitere optische Elemente umfassen, wie z.B. optische Modulatoren, Linsen, Strahlteiler und/oder Spiegel.

Es ist denkbar, dass die Spinndüseneinheit 10a zur Beaufschlagung zumindest der Polymerlösung 12a und/oder des Innenfluids 30a mit der elektromagnetischen Strahlung zumindest teilweise für die elektromagnetische Strahlung durchlässig ausgebildet sein kann. Beispielsweise könnte die Spinndüseneinheit 10a zumindest teilweise transparente Bauteile und/oder Öffnungen aufweisen. Im vorliegenden Fall umfasst die Bestrahlungseinheit 20a zumindest ein Strahlungsleitelement 22a, 24a, um die elektromagnetische Strahlung in die Spinndüseneinheit 10a einzukoppeln. Die Bestrahlungseinheit 20a koppelt in einem Betriebszustand die elektromagnetische Strahlung in zumindest einen Kanal 26a, 34a der Spinndüseneinheit 10a ein. Die Bestrahlungseinheit 20a weist je Kanal 26a, 34a eine Strahlungsleitelement 22a, 24a auf. Die Bestrahlungseinheit 20a koppelt in zumindest einem Betriebszustand die elektromagnetische Strahlung zumindest teilweise in den Polymerlösungskanal 34a ein. Im vorliegenden Fall weist die Bestrahlungseinheit 20a ein Strahlungsleitelement 22a zur Einkopplung der elektromagnetischen Strahlung in den Polymerlösungskanal 34a auf. Die Bestrahlungseinheit 20a koppelt in zumindest einem Betriebszustand die elektromagnetische Strahlung zumindest teilweise in den Innenfluidkanal 26a ein. Ferner weist die Bestrahlungseinheit 20a ein Strahlungsleitelement 24a zur Einkopplung der elektromagnetischen Strahlung in den Innenfluidkanal 26a auf. Das Strahlungsleitelement 22a ist optisch mit der Strahlungsquelle 68a verbunden. Das Strahlungsleitelement 24a ist optisch mit der Strahlungsquelle 66a verbunden. Alternativ oder zusätzlich kann die Bestrahlungseinheit 20a in zumindest einem Betriebszustand die elektromagnetische Strahlung zumindest teilweise in zumindest einen weiteren Polymerlösungskanal und/oder den Innenfluidkanal einkoppeln.

Die Strahlungsleitelemente 22a, 24a sind zumindest im Wesentlichen äquivalent ausgebildet zueinander. Deshalb wird im Folgenden nur ein Strahlungsleitelement 22a beschrieben. Wobei die folgende Beschreibung grundsätzlich auch auf das Strahlungsleitelement 24a übertragen werden kann. Es ist jedoch auch denkbar, dass die Strahlungsleitelemente 22a, 24a voneinander verschieden ausgebildet sind.

Das Strahlungsleitelement 22a überträgt in einem Betriebszustand die elektromagnetische Strahlung optisch. Das Strahlungsleitelement 22a überträgt die elektromagnetische Strahlung von der Strahlungsquelle 68a bis zur Spinndüseneinheit 10a. Das Strahlungsleitelement 22a, 24a koppelt in einem Betriebszustand die elektromagnetische Strahlung in die Spinndüseneinheit 10a ein. Das Strahlungsleitelement 22a, 24a ist als eine optische Faser ausgebildet. Das Strahlungsleitelement 22a, 24a ist in der Spinndüseneinheit 10a angeordnet. Das Strahlungsleitelement 22a, 24a ist zerstörungsfrei lösbar mit der Spinndüseneinheit 10a verbunden. Das Strahlungsleitelement 22a ist werkzeugfrei lösbar mit der Spinndüseneinheit 10a verbunden. Es ist jedoch auch denkbar, dass das Strahlungsleitelement 22a, 24a an der Spinndüseneinheit 10a angeflanscht und/oder mit dieser verklebt ist.

Ein Brechungsindex des Strahlungsleitelements 22a kann im Wesentlichen identisch sein mit einem Brechungsindex der durch den Polymerlösungskanal 34a fließenden Polymerlösung 12a. Ferner kann ein Brechungsindex des Strahlungsleitelements 24a im Wesentlichen identisch sein mit einem Brechungsindex des durch den Innenfluidkanal 26a fließenden Innenfluids 30a.

Das Strahlungsleitelement 22a kann eine konkave und vorzugsweise konvexe Spitze aufweisen, um vorteilhaft eine Einkopplung weiter zu verbessern. Alternativ oder zusätzlich kann auch eine dem Strahlungsleitelement 22a nachgeschaltete Optik der Filamentherstellvorrichtung zur Einkopplung der elektromagnetischen Strahlung denkbar sein.

Ferner kann das Strahlungsleitelement 24a eine konkave und vorzugsweise konvexe Spitze aufweisen, um vorteilhaft eine Einkopplung weiter zu verbessern. Alternativ oder zusätzlich kann auch eine dem Strahlungsleitelement 24a nachgeschaltete Optik der Filamentherstellvorrichtung zur Einkopplung der elektromagnetischen Strahlung denkbar sein.

Um insbesondere eine Leitung der elektromagnetischen Strahlung innerhalb des Innenfluids 30a zu verbessern, kann ein Innenfluid 30a genutzt werden, welches einen Brechungsindex aufweist, der größer, vorzugsweise wesentlich größer, ist als ein Brechungsindex der Polymerlösung 12a. Das Innenfluid 30a und die Polymerlösung 12a bilden ein flüssiges Strahlungsleitelement 110a aus. Alternativ kann, um eine Leitung der Strahlung innerhalb der Polymerlösung 12a zu verbessern, eine Polymerlösung 12a genutzt werden, welche einen Brechungsindex aufweist, der größer, vorzugsweise wesentlich größer, ist als der Brechungsindex des Innenfluids 30a und insbesondere ein Brechungsindex einer Umgebung.

Ferner weist die Polymerisationseinheit 18a eine Temperiereinheit 44a auf. Die Temperiereinheit 44a beaufschlagt in zumindest einem Betriebszustand zumindest die Polymerlösung 12a zur Initiation der Polymerisation mit Wärmeenergie. Es ist denkbar, dass die Bestrahlungseinheit 20a und/oder die Temperiereinheit 44a die Polymerisation gemeinsam oder unabhängig voneinander initiieren können. Die Temperiereinheit 44a beaufschlagt in zumindest einem Betriebszustand zumindest die Innenfluidlösung 30a mit Wärmeenergie. Alternativ oder zusätzlich kann die Temperiereinheit die weitere Polymerlösung und/oder das weitere Innenfluid zur Initiation der Polymerisation mit Wärmeenergie beaufschlagen. Die Wärmeenergie ist so gewählt, dass diese zumindest zur Aktivierung des Polymerisationsinitiators genügt. Die Wärmeenergie entspricht der Zersetzungstemperatur des Polymerisationsinitiators.

Die Temperiereinheit 44a weist eine Wärmeenergiequelle 70a auf. Ferner weist die Temperiereinheit 44a ein Temperierelement 72a auf. Das Temperierelement 72a nimmt Wärmeenergie auf und/oder gibt Wärmeenergie ab. Das Temperierelement 72a ist als ein Radiator ausgebildet. Das Temperierelement 72a ist zur Wärmeenergieübertragung mit der Wärmeenergiequelle 70a verbunden. Im vorliegenden Fall ist das Temperierelement 72a mittels eines Wärmetransportelements 74a mit der Wärmeenergiequelle 70a verbunden. Das Wärmetransportelement 74a nimmt Wärmeenergie von Wärmeenergiequelle 70a auf und gibt diese an das Temperierelement 72a ab. Das Temperierelement 72a ist einstückig mit einem Grundkörper 78a der Spinndüseneinheit 10a ausgebildet. Das Temperierelement 72a ist als ein Radiator ausgebildet. Die Temperiereinheit kann insbesondere als ein Thermocryostat ausgebildet sein.

Die Filamentherstellvorrichtung weist eine Steuereinheit 46a auf. Die Steuereinheit 46a steuert die Polymerisationseinheit 18a in zumindest einem Betriebszustand zur gezielten Initiation der Polymerisation. Die Steuereinheit 46a ist mit der Spinndüseneinheit verbunden. Die Steuereinheit 46a ist mit der Polymerisationseinheit 18a verbunden. Die Steuereinheit 46a ist mit der Bestrahlungseinheit 20a verbunden. Die Steuereinheit ist mit der Zuführeinheit 38a verbunden. Die Steuereinheit 46a ist mit der Temperiereinheit 44a verbunden. Die Steuereinheit 46a ist als eine elektronische Einheit ausgebildet. Die Steuereinheit 46a steuert und/oder regelt in einem Betriebszustand zumindest einen Betriebsparameter der Polymerisationseinheit 18a. Die Steuereinheit 46a umfasst eine Recheneinheit (nicht dargestellt). Ferner weist die Steuereinheit 46a eine Speichereinheit (nicht dargestellt). Die Steuereinheit 46a weist ein Steuer- und/oder Regelprogramm auf. Das Steuer- und/oder Regelprogramm ist auf der Speichereinheit gespeichert. Das Steuer- und/oder Rechenprogramm wird in zumindest einem Betriebszustand von der Recheneinheit ausgeführt. Im vorliegenden Fall variiert die Steuereinheit 46a in einem Betriebszustand als Betriebsparameter die Intensität der elektromagnetischen Strahlung. Die Steuereinheit 46a variiert in einem Betriebszustand ferner den zeitlichen Verlauf des Betriebsparameters. Ferner variiert die Steuereinheit 46a als Betriebsparameter die Wärmeenergie der Temperiereinheit 44a. Ferner variiert die Steuereinheit 46a in einem Betriebszustand als Betriebsparameter eine Durchflussgeschwindigkeit der Polymerlösung und/oder des Innenfluids durch die Spinndüseneinheit 10a und/oder ein Stoffmengenverhältnis, insbesondere des Polymers der Polymerlösung und des Polymerisationsinitiators.

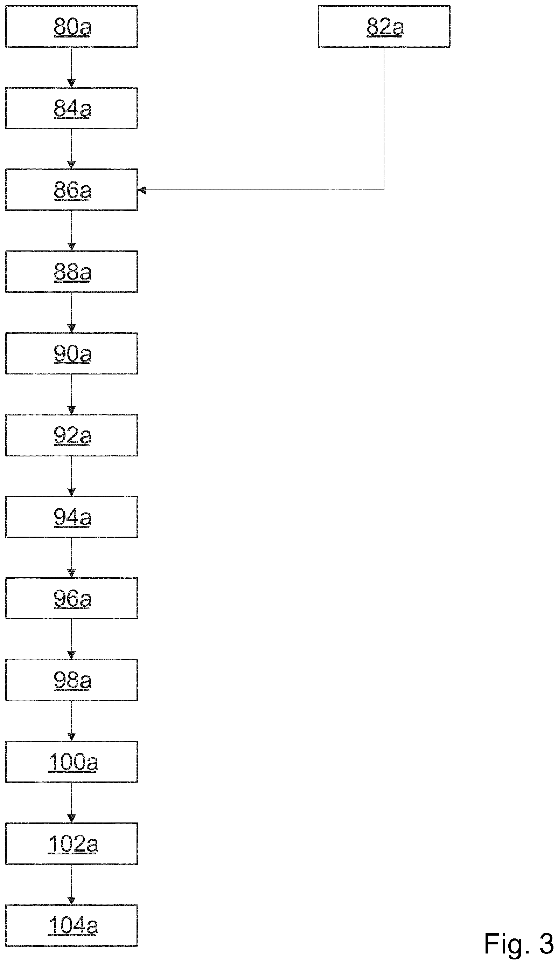

In Figur 3 ist ein schematischer Ablaufplan eines Verfahrens zur Herstellung des Filaments 16a mit der Filamentherstellvorrichtung dargestellt.

In einem Verfahrensschritt 80a wird die Polymerlösung 12a hergestellt. Zusätzlich könnte in diesem Verfahrensschritt eine weitere Polymerlösung hergestellt werden. Die Polymerlösung 12a wird von der Zuführeinheit 38a aufgenommen. Die Polymerlösungszufuhrleitung 54a der Zuführeinheit 38a nimmt die Polymerlösung 12a auf. Es ist insbesondere denkbar, dass die Polymerlösungen verschiedene Polymerlösungen sind.

In einem Verfahrensschritt 82a wird das Innenfluid 30a hergestellt. Das Innenfluid 30a wird von der Zuführeinheit 38a aufgenommen. Die Innenfluidzufuhrleitung 56a der Zuführeinheit 38a nimmt das Innenfluid auf. Zusätzlich könnte in diesem Verfahrensschritt ein weiteres Innenfluid hergestellt werden. Es ist insbesondere denkbar, dass die Innenfluide verschiedene Innenfluide sind.

In einem Verfahrensschritt 84a wird die Polymerlösung 12a gefiltert. Die Zuführeinheit 38a weist dazu einen Filter auf.

In einem Verfahrensschritt 86a wird ein Polymerisationsinitiator von der Zufuhreinheit 38a aufgenommen. Dazu weist die Zufuhreinheit 38a die Polymerisationsinitiatorzufuhrleitung 58a auf. Ferner weist die Zufuhreinheit dazu die weitere Polymerisationszufuhrleitung 62a auf. Die Polymerlösung12 wird mit dem Polymerisationsinitiator vermischt. Das Innenfluid 30a wird mit dem Polymerisationsinitiator vermischt. Alternativ kann auch nur die Polymerlösung oder nur das Innenfluid mit dem Polymerisationsinitiator vermischt werden. Nach dem Vermischen ist der Polymerisationsinitiator Bestandteil der Polymerlösung 12a und/oder des Innenfluids 30a. Ferner werden der Spinndüseneinheit 10a die Polymerlösung 12a, welche den Polymerisationsinitiator aufweist und/oder das Innenfluid 30a, welches den Polymerisationsinitiator aufweist, zugeführt.

In einem Verfahrensschritt 88a wird mittels der Spinndüseneinheit 10a aus der Polymerlösung 12a und/oder mittels des Innenfluids 30a zumindest das Filament 16a hergestellt, wobei eine Polymerisation zumindest teilweise innerhalb der Spinndüseneinheit 10a initiiert wird.

In einem Verfahrensschritt 90a wird das Filament 16a in einem Fällbad ausgefällt.

In einem Verfahrensschritt 92a wird das Filament 16a in einem weiteren Fällbad ausgefällt. Das Fällbad und das weitere Fällbad weisen verschiedene Fällbadtemperaturen auf.

In einem Verfahrensschritt 94a wird das Filament 16a auf eine Spule aufgerollt. Das Filament wird dabei vorteilhaft mit einer Geschwindigkeit mindestens von 2 U/min und/oder maximal von 7 U/min aufgerollt.

In einem Verfahrensschritt 96a wird das Filament 16a in ein Spülbecken eingebracht. Das Filament 16a wird in dem Spülbecken ausgespült. Hierdurch werden Rückstände der Polymerlösung 12a und des Innenfluids 30a von dem Filament 16a gelöst.

In einem Verfahrensschritt 98a wird das Filament in ein Konditionierungsbecken eingebracht. Es wird eine Konditionierung des Filaments 16a durchgeführt. Die Konditionierung erfolgt mittels Hypochlorid. Hierdurch werden nicht polymerisierte Anteile der Polymerlösung 12a von dem Filament 16a abgespalten.

In einem Verfahrensschritt 100a wird das Filament 16a gespült.

In einem Verfahrensschritt 102a wird das Filament 16a glycerinisiert. Das Filament 16a wird mit Glycerin in Kontakt gebracht. Hierdurch wird eine Flexibilität und/oder Geschmeidigkeit des Filaments 16a verbessert.

In einem Verfahrensschritt 104a wird das Filament 16a getrocknet.

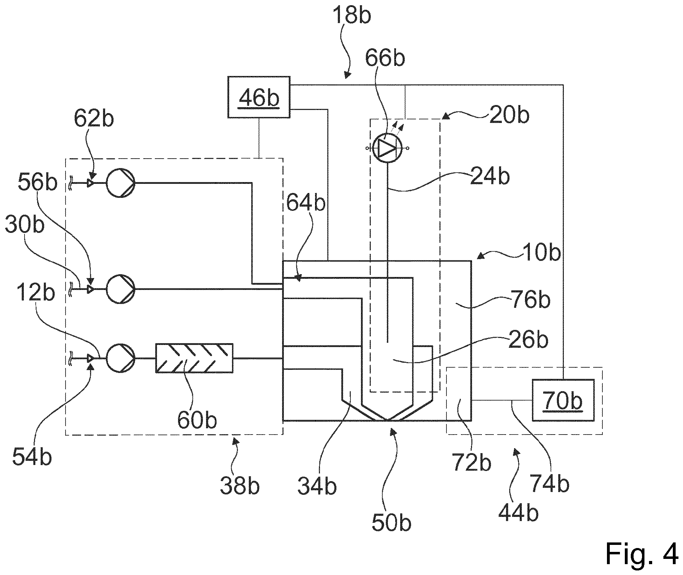

In den Figuren 4 bis 11 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den weiteren Ausführungsbeispielen der Figur 4 bis 11 ist der Buchstabe a durch die Buchstaben b bis f ersetzt.

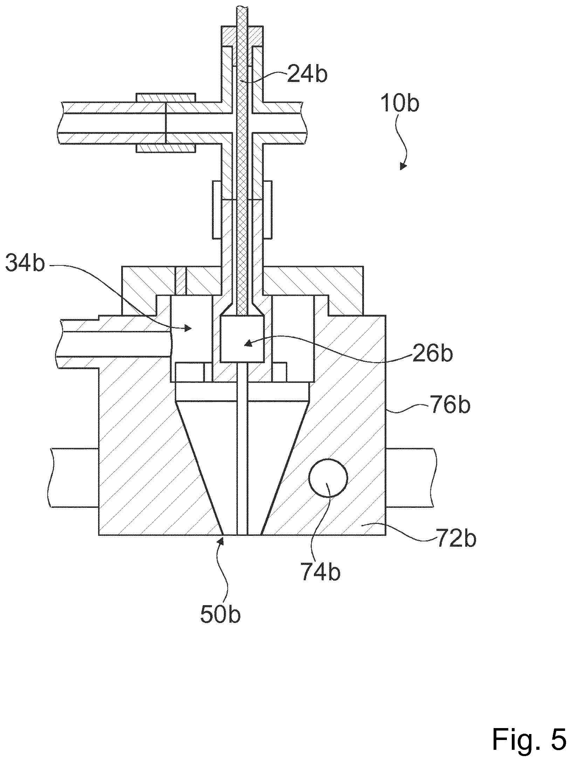

Figuren 4 und 5 zeigen ein weiteres Ausführungsbeispiel der Filamentherstellvorrichtung in einer schematischen Darstellung und einmal in einer Schnittansicht. Dieses Ausführungsbeispiel unterscheidet sich dabei zumindest im Wesentlichen von dem vorhergehenden Ausführungsbeispiel dadurch, dass eine Polymerisationszufuhrleitung 62b unmittelbar mit dem Innenfluidkanal 26b verbunden ist. Der weitere Mischer 64b kann hier von dem Innenfluidkanal ausgebildet werden. Alternativ kann aber auch auf den weiteren Mischer 64b verzichtet werden. Ferner weist die Bestrahlungseinheit 20b nur eine Strahlungsquelle 66b auf. Die Bestrahlungseinheit 20b weist nur ein Lichtleiterelement 24b auf. Im vorliegenden Fall wird das Innenfluid 26 und insbesondere der Polymerisationsinitiator, welcher Bestandteil des Innenfluids 30b ist, mit elektromagnetischer Strahlung beaufschlagt. Die elektromagentische Strahlung wird in den Innenfluidkanal 30b eingekoppelt.

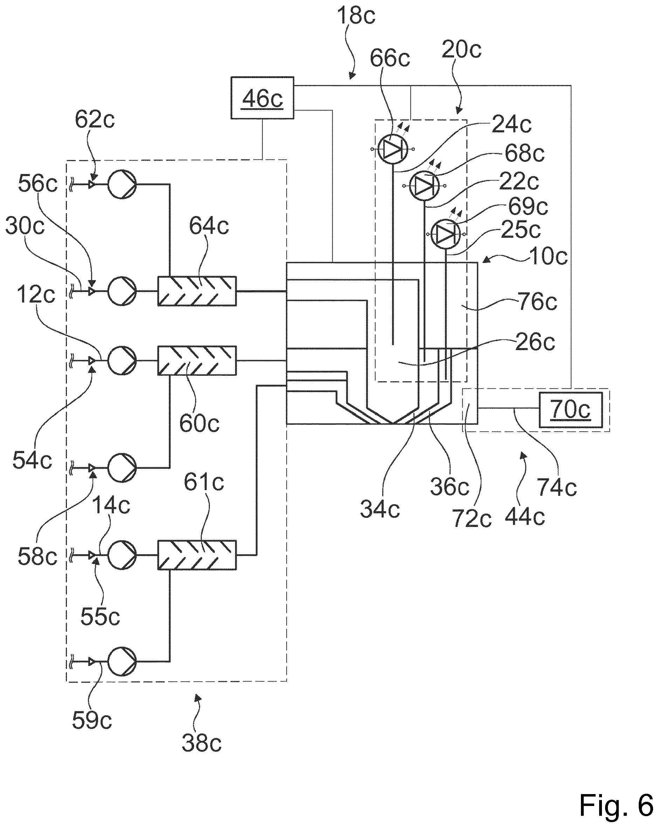

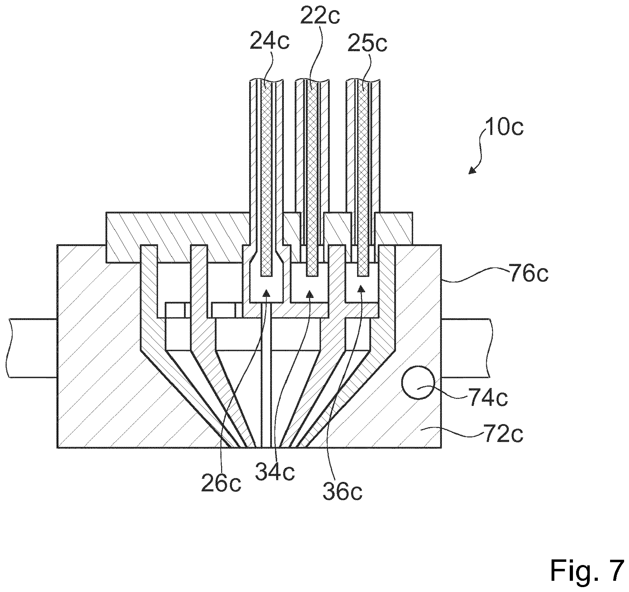

Figur 6 und 7 zeigen ein alternatives Ausführungsbeispiel der Filamentherstellvorrichtung in einer schematischen Darstellung und einmal in einer Schnittansicht. Dieses Ausführungsbeispiel unterscheidet sich dabei zumindest im Wesentlichen von dem vorhergehenden Ausführungsbeispielen dadurch, dass die Spinndüseneinheit einen weiteren Polymerlösungskanal 36c aufweist. Der weitere Polymerlösungskanal 36c leitet in einem Betriebszustand eine weitere Polymerlösung 14c. Der weitere Polymerlösungskanal 36c umgreift einen Polymerlösungskanal 34c. Der Polymerlösungskanal 34c und der weitere Polymerlösungskanal 36c sind zur Leitung verschiedener Polymerlösungen 12c, 14c vorgesehen. Die Polymerlösung 12c und die weitere Polymerlösung 14c unterscheiden sich zumindest durch ein Polymer voneinander.

Die Polymerlösung 12c weist Polyethersulfon (PES) auf, während die weitere Polymerlösung 14c frei von Polyethersulfon (PES) ist. Ferner weist die weitere Polymerlösung14c Polyvinylidenfluorid (PVDF) auf, während die Polymerlösung 12c frei von Polyvinylidenfluorid (PVDF) ist. Ferner weist eine Zufuhreinheit 38b eine weitere Polymerlösungszufuhrleitung 55c auf. Ferner weist die Zufuhreinheit 38c eine zusätzliche Polymerisationsinitiatorzufuhrleitung 59c auf. Die Zuführeinheit 38c weist einen zusätzlichen Mischer 61c auf. Eine Bestrahlungseinheit 20c weist eine zusätzliche Strahlungsquelle 69c auf. Ferner weist die Bestrahlungseinheit 20c ein zusätzliches Strahlungsleitelement 25c auf, um die elektromagnetische Strahlung in eine Spinndüseneinheit 10c einzukoppeln. Die Bestrahlungseinheit 20c koppelt in einem Betriebszustand die elektromagnetische Strahlung in zumindest in den weiteren Polymerisationskanal 36c ein.

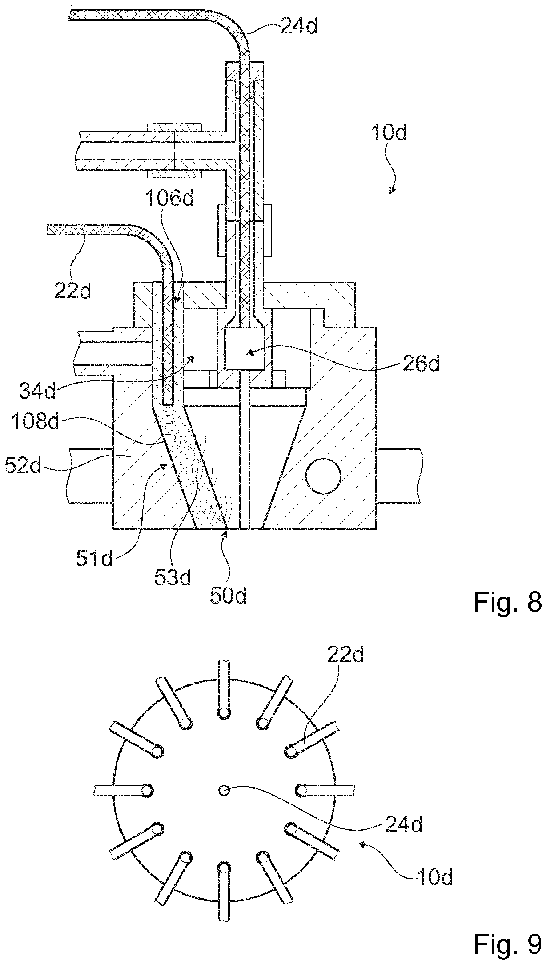

Figuren 8 und 9 zeigen einen Teil eines alternativen Ausführungsbeispiels einer Filamentherstellvorrichtung in einer Schnittansicht und in einer Draufsicht. Die Filamentherstellvorrichtung umfasst eine Spinndüseneinheit 10d. Ferner umfasst die Filamentherstellvorrichtung eine Bestrahlungseinheit 20d. Die Bestrahlungseinheit 20d umfasst zumindest ein Strahlungsleitelement 22d, 24d, um elektromagnetische Strahlung in die Spinndüseneinheit 10d einzukoppeln. Die Bestrahlungseinheit 20d koppelt in zumindest einem Betriebszustand die elektromagnetische Strahlung zumindest teilweise in einen Innenfluidkanal 26d der Spinndüseneinheit 10d. Die Bestrahlungseinheit 20d koppelt in zumindest einem Betriebszustand die elektromagnetische Strahlung zumindest teilweise in einen Polymerlösungskanal 34d der Spinndüseneinheit 10d.

Die Spinndüseneinheit 10d weist eine Spinndüse 50d auf. Die Spinndüse 50d weist eine Spinndüsenwandung 51d auf. Die Spinndüsenwandung 51d begrenzt zumindest einen Kanal der Spinndüseneinheit 10d, insbesondere den Polymerlösungskanal 34d. Die Spinndüsenwandung 51d weist einen Aufnahmekanal 106d auf. Der Aufnahmekanal 106d ist zur Aufnahme des Strahlungsleitelements 22d vorgesehen. Die Spinndüsenwandung 51d weist einen ersten Teilabschnitt 52d auf. Der erste Teilabschnitt 52d besteht aus einem reflektierenden Material, wie beispielsweise Metall. Ferner weist die Spinndüsenwandung 51d einen zweiten Teilabschnitt 53d auf. Der zweite Teilabschnitt 53d besteht aus einem transparenten Material. Der Aufnahmekanal 106d ist innerhalb des zweiten Teilabschnitts 53d angeordnet. Der Aufnahmekanal 106d verläuft zumindest im Wesentlichen parallel zum Polymerlösungskanal 34d.

Das Strahlungsleitelement 22d ist zumindest teilweise innerhalb der Spinndüsenwandung 51d angeordnet. Das Strahlungsleitelement 22d ist zumindest teilweise in dem Aufnahmekanal 106d angeordnet. Im vorliegenden Fall verläuft das Strahlungsleitelement 22d zumindest im Wesentlichen parallel zum Polymerlösungskanal 34d. Das Strahlungsleitelement 22d ist in dem zweiten Teilabschnitt 53d angeordnet. Das Strahlungsleitelement 22d koppelt elektromagnetische Strahlung in den zweiten Teilabschnitt 53d ein. An einer Grenzfläche 108d zwischen dem ersten Teilabschnitt 52d und dem zweiten Teilabschnitt 53d wird die elektromagnetische Strahlung in Richtung des Polymerlösungskanal 34d reflektiert und insbesondere in diesen eingekoppelt.

Alternativ kann die Reflexion an der Grenzfläche 108d durch Totalreflexion erreicht werden, beispielsweise wenn ein Brechungsindex des ersten Teilabschnitts 52d geringer ist als ein Brechungsindex des zweiten Teilabschnitts 53d.

Im vorliegenden Fall weist die Filemantherstellvorrichtung mehrere Strahlungsleitelemente 22d auf. Zur besseren Übersichtlichkeit ist nur ein Strahlungsleitelement 22d mit einem Bezugszeichen versehen. Die Strahlungsleitelemente 22d sind zueinander identisch ausgebildet. Die Strahlungsleitelemente 22d sind rotationssymmetrisch um den Polymerlösungskanal 34d angeordnet. Die Strahlungsleitelemente 22d sind ringförmig angeordnet (vgl. Fig. 9).

In einer äquivalenten Art und Weise könnte auch eine Einkopplung von elektromagnetischer Strahlung durch das Strahlungsleitelement 24d in den Innenfluidkanal 26d erzielt werden.

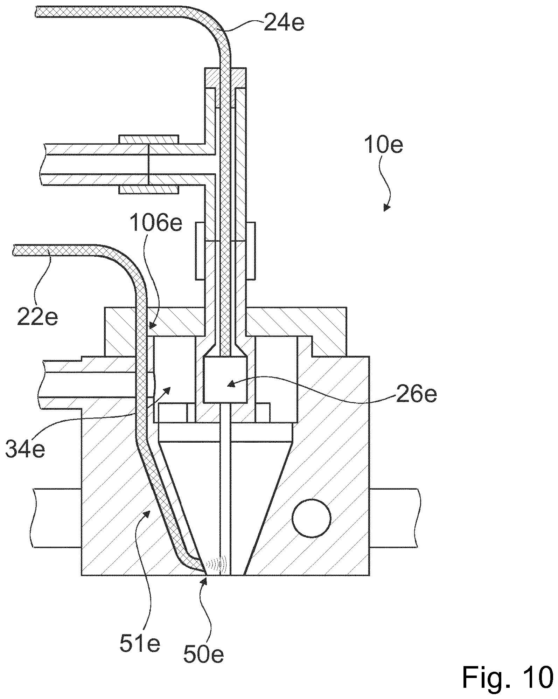

Figur 10 zeigt einen Teil eines alternativen Ausführungsbeispiels einer Filamentherstellvorrichtung in einer Schnittansicht. Die Filamentherstellvorrichtung umfasst eine Spinndüseneinheit 10e. Ferner umfasst die Filamentherstellvorrichtung eine Bestrahlungseinheit 20e. Die Bestrahlungseinheit 20e umfasst zumindest ein

Strahlungsleitelement 22e, 24e, um elektromagnetische Strahlung in die Spinndüseneinheit 10e einzukoppeln. Die Bestrahlungseinheit 20e koppelt in zumindest einem Betriebszustand die elektromagnetische Strahlung zumindest teilweise in einen Innenfluidkanal 26e der Spinndüseneinheit 10e. Die Bestrahlungseinheit 20e koppelt in zumindest einem Betriebszustand die elektromagnetische Strahlung zumindest teilweise in einen Polymerlösungskanal 34e der Spinndüseneinheit 10e.

Die Spinndüseneinheit 10e weist eine Spinndüse 50e auf. Die Spinndüse 50e weist eine Spinndüsenwandung 51e auf. Die Spinndüsenwandung 51e begrenzt zumindest einen Kanal der Spinndüseneinheit 10e, insbesondere den Polymerlösungskanal 34e. Die Spinndüsenwandung 51e weist einen Aufnahmekanal 106e auf. Der Aufnahmekanal 106e ist zur Aufnahme der Strahlungsleitelements 22e vorgesehen. Der Aufnahmekanal 106e verläuft zumindest im Wesentlichen parallel zum Polymerlösungskanal 34e. Der Aufnahmekanal 106e ist in Richtung des Polymerlösungskanals 34e gebogen. Der Aufnahmekanal 106e weist eine Öffnung in Richtung des Polymerlösungskanals 34e auf.

Das Strahlungsleitelement 22e ist zumindest teilweise innerhalb der Spinndüsenwandung 51e angeordnet. Das Strahlungsleitelement 22e ist zumindest teilweise in dem Aufnahmekanal 106e angeordnet. Im vorliegenden Fall verläuft das Strahlungsleitelement 22e zumindest im Wesentlichen parallel zum Polymerlösungskanal 34e. Ein Ende des Strahlungsleitelements 22e ist zur Einkopplung der elektromagnetischen Strahlung in den Polymerlösungskanal 34e in der Öffnung des Aufnahmekanals 106e angeordnet.

Im vorliegenden Fall weist die Filamentherstellvorrichtung mehrere Strahlungsleitelemente 22e auf. Zur besseren Übersichtlichkeit ist nur ein Strahlungsleitelement 22e mit einem Bezugszeichen versehen. Die Strahlungsleitelemente 22e sind zueinander identisch ausgebildet. Die Strahlungsleitelemente 22e sind rotationssymmetrisch um den Polymerlösungskanal 34e angeordnet. Die Strahlungselemente 22e sind ringförmig angeordnet (vgl. Fig. 9).

In einer äquivalenten Art und Weise könnte auch eine Einkopplung von elektromagnetischer Strahlung durch das Strahlungsleitelement 24e in den Innenfluidkanal 26e erzielt werden.

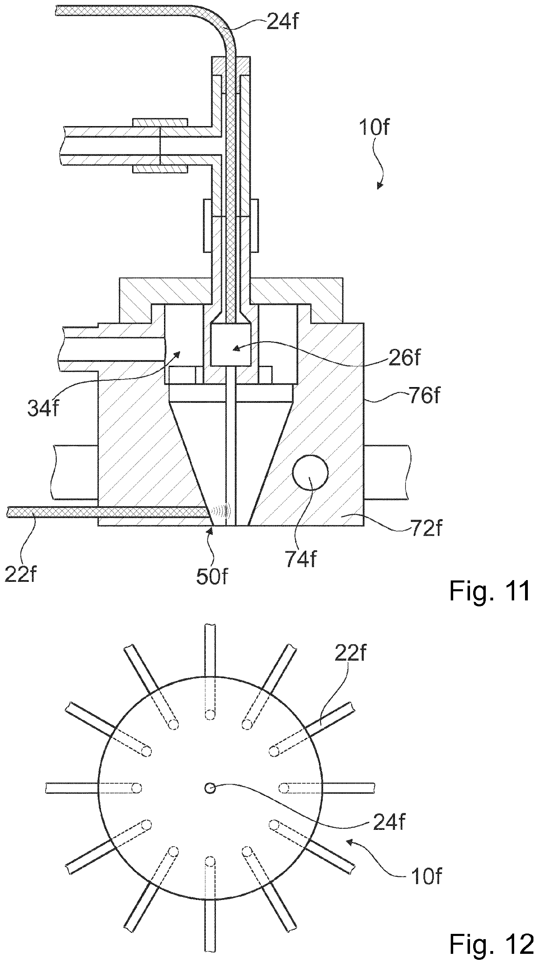

Figuren 11 und 12 zeigen einen Teil einer alternativen Filamentherstellvorrichtung in einer Schnittansicht und in einer Draufsicht. Die Filamentherstellvorrichtung umfasst eine

Spinndüseneinheit 10f. Ferner umfasst die Filamentherstellvorrichtung eine Bestrahlungseinheit 20f. Die Bestrahlungseinheit 20f umfasst zumindest ein Strahlungsleitelement 22f, 24f, um elektromagnetische Strahlung in die Spinndüseneinheit 10f einzukoppeln. Die Bestrahlungseinheit 20f koppelt in zumindest einem Betriebszustand die elektromagnetische Strahlung zumindest teilweise in einen Innenfluidkanal 26f der Spinndüseneinheit 10f. Die Bestrahlungseinheit 20f koppelt in zumindest einem Betriebszustand die elektromagnetische Strahlung zumindest teilweise in einen Polymerlösungskanal 34f der Spinndüseneinheit 10f.

Die Spinndüseneinheit 10f weist eine Spinndüse 50f auf. Die Spinndüse 50f weist eine Spinndüsenwandung 51f auf. Die Spinndüsenwandung 51f begrenzt zumindest einen Kanal der Spinndüseneinheit 10f, insbesondere den Polymerlösungskanal 34f. Die Spinndüsenwandung 51f weist einen Aufnahmekanal 106f auf. Der Aufnahmekanal 106f ist zur Aufnahme der Strahlungsleitelements 22f vorgesehen. Der Aufnahmekanal 106f verläuft zumindest im Wesentlichen senkrecht zum Polymerlösungskanal 34f. Der Aufnahmekanal 106f weist eine Öffnung in Richtung des Polymerlösungskanals 34f auf.

Das Strahlungsleitelement 22f ist zumindest teilweise innerhalb der Spinndüsenwandung 51f angeordnet. Das Strahlungsleitelement 22f ist zumindest teilweise in dem Aufnahmekanal 106f angeordnet. Im vorliegenden Fall verläuft das Strahlungsleitelement 22f zumindest im Wesentlichen senkrecht zum Polymerlösungskanal 34f. Ein Ende des Strahlungsleitelements 22f ist zur Einkopplung der elektromagnetischen Strahlung in den Polymerlösungskanal 34f in der Öffnung des Aufnahmekanals 106f angeordnet.

Im vorliegenden Fall weist die Filamentherstellvorrichtung mehrere Strahlungsleitelemente 22f auf. Zur besseren Übersichtlichkeit ist nur ein Strahlungsleitelement 22f mit einem Bezugszeichen versehen. Die Strahlungsleitelemente 22f sind zueinander identisch ausgebildet. Die Strahlungsleitelemente 22f sind rotationssymmetrisch um den Polymerlösungskanal 34f angeordnet. Die Strahlungsleitelemente 22f sind ringförmig angeordnet (vgl. Fig. 9).

In einer äquivalenten Art und Weise könnte auch eine Einkopplung von elektromagnetischer Strahlung durch das Strahlungsleitelement 24f in den Innenfluidkanal 26f erzielt werden.

## Patentansprüche

1. Filamentherstellvorrichtung, insbesondere Filamentreaktivspinnherstellvorrichtung, mit zumindest einer Spinndüseneinheit (10a - 10f), welche dazu vorgesehen ist, aus zumindest einer Polymerlösung (12a) zumindest ein Filament (16a - 16f), welches als eine Hohlfasermembran ausgebildet ist, herzustellen, und mit einer Polymerisationseinheit (18a - 18f), welche dazu vorgesehen ist, eine Polymerisation der Polymerlösung (12a; 14b) zu initiieren, wobei die Polymerisationseinheit (18a - 18f) dazu vorgesehen ist, die Polymerisation zumindest teilweise innerhalb der Spinndüseneinheit (10a - 10f) zu initiieren; wobei die Spinndüseneinheit (10a - 10f) zumindest einen Innenfluidkanal (26a - 26f), welcher zur Leitung eines Innenfluids (30a - 30c) vorgesehen ist und zumindest einen Polymerlösungskanal (34a - 34f), welcher zur Leitung der Polymerlösung (12a - 12c) vorgesehen ist, aufweist, wobei der Polymerlösungskanal (34a - 34f) den Innenfluidkanal (26a - 26f) in zumindest einem Querschnitt wenigstens teilweise umgreift, **dadurch gekennzeichnet, dass** die Polymerisationseinheit eine Bestrahlungseinheit zur Beaufschlagung des Innenfluids innerhalb der Spinndüseneinheit mit der elektromagnetischen Strahlung umfasst und dass die Polymerisationseinheit (18a - 18c) eine Temperiereinheit (44a - 44c) aufweist, welche dazu vorgesehen ist, zumindest die Polymerlösung (12a - 12c; 14c) zur Initiation der Polymerisation mit Wärmeenergie zu beaufschlagen.

2. Filamentherstellvorrichtung nach Anspruch 1, **dadurch gekennzeichnet, dass** die Spinndüseneinheit (10a - 10f) zumindest teilweise für die elektromagnetische Strahlung durchlässig ausgebildet ist und/oder die Bestrahlungseinheit zumindest ein Strahlungsleitelement umfasst, um die elektromagnetische Strahlung in die Spinndüseneinheit einzukoppeln.

3. Filamentherstellvorrichtung nach Anspruch 1 oder 2, **dadurch gekennzeichnet, dass** die Polymerisationseinheit (18a - 18f) zumindest eine Bestrahlungseinheit (20a - 20f) umfasst, welche dazu vorgesehen ist, die Polymerlösung (12a) zur Initiation der Polymerisation mit elektromagnetischer Strahlung zu beaufschlagen.

4. Filamentherstellvorrichtung nach einem der Ansprüche 1 bis 3, **dadurch gekennzeichnet, dass** die Bestrahlungseinheit (20) zumindest ein Strahlungsleitelement (22a, 22c - 22f; 24a - 24f) umfasst, welches dazu vorgesehen ist, die elektromagnetische Strahlung zumindest teilweise in die Spinndüseneinheit (10a - 10f) einzukoppeln.

5. Filamentherstellvorrichtung nach einem der Ansprüche 1 bis 4, **dadurch gekennzeichnet, dass** die Spinndüseneinheit (10c) zumindest einen weiteren Polymerlösungskanal (36c) aufweist, wobei der Polymerlösungskanal (34c) und der weitere Polymerlösungskanal (36c) zur Leitung verschiedener Polymerlösungen (12c, 14c) vorgesehen sind.

6. Filamentherstellvorrichtung nach einem der Ansprüche 1 bis 5, **dadurch gekennzeichnet, dass** die Bestrahlungseinheit (20a - 20f) dazu vorgesehen ist, die elektromagnetische Strahlung zumindest teilweise in zumindest einen Kanal (26a - 26f; 34a - 34f; 36c) der Spinndüseneinheit (10a - 10f) einzukoppeln.

7. Filamentherstellvorrichtung nach einem der vorhergehenden Ansprüche, **dadurch gekennzeichnet, dass** die Polymerisationseinheit (18a - 18c) zumindest eine Zufuhreinheit (38a - 38c) umfasst, welche dazu vorgesehen ist, zumindest einem Kanal (26a - 26c; 34a - 34c; 36c) der Spinndüseneinheit (10a - 10c) einen Polymerisationsinitiator zuzuführen.

8. Filamentherstellvorrichtung nach einem der vorhergehenden Ansprüche, **gekennzeichnet durch** eine Steuereinheit (46a - 46c), welche dazu vorgesehen ist, die Polymerisationseinheit (18a - 18c) zur gezielten Initiation der Polymerisation zu steuern.

9. Herstellungsverfahren, insbesondere Reaktivspinnherstellungsverfahren, mit einer Filamentherstellvorrichtung nach einem der vorhergehenden Ansprüche, welche eine Spinndüseneinheit (10a - 10f) mit zumindest einem Innenfluidkanal (26a - 26f), welcher zur Leitung eines Innenfluids (30a - 30c) vorgesehen ist, und zumindest einem Polymerlösungskanal (34a - 34f) umfasst, welcher zur Leitung der Polymerlösung (12a - 12c) vorgesehen ist, aufweist, wobei der Polymerlösungskanal (34a - 34f) den Innenfluidkanal (26a - 26f) in zumindest einem Querschnitt wenigstens teilweise umgreift, wobei mittels der Spinndüseneinheit (10a - 10f) aus zumindest einer Polymerlösung (12a - 12f) zumindest ein Filament (16a - 16c), welches als Hohlfasermembran ausgebildet ist, hergestellt wird, **dadurch gekennzeichnet, dass** eine Polymerisation zumindest teilweise innerhalb der Spinndüseneinheit (10a - 10f) dadurch initiiert wird, dass das Innenfluid und gegebenenfalls auch die Polymerlösung mit elektromagnetischer Strahlung beaufschlagt wird, und dass zumindest die Polymerlösung (12a - 12c; 14c) zur Initiation der Polymerisation mit Wärmeenergie mittels der Temperiereinheit (44a - 44c) der Polymerisationseinheit (18a - 18c) beaufschlagt wird.

## Claims

1. A filament production device, in particular a filament reaction-spinning production device, comprising at least one spinning nozzle unit (10a - 10f), which is provided for producing at least one filament (16a - 16f), which is formed as a hollow fibre membrane, from at least one polymer solution (12a), and comprising a polymerisation unit (18a - 18f), which is provided for initiating a polymerisation of the polymer solution (12a; 14b), wherein the polymerisation unit (18a - 18f) is provided for initiating the polymerisation at least partially within the spinning nozzle unit (10a - 10f); wherein the spinning nozzle unit (10a - 10f) has at least one inner fluid channel (26a - 26f), which is provided for guiding an inner fluid (30a - 30c), and has at least one polymer solution channel (34a - 34f), which is provided for guiding the polymer solution (12a - 12c), wherein the polymer solution channel (34a - 34f) surrounds the inner fluid channel (26a - 26f) at least partially in at least one cross-section, **characterised in that** the polymerisation unit comprises an irradiation unit for applying electromagnetic radiation to the inner fluid within the spinning nozzle unit and **in that** the polymerisation unit (18a - 18c) has a temperature-control unit (44a - 44c), which is provided for applying heat energy to at least the polymer solution (12a - 12c; 14c), for initiating the polymerisation.

2. The filament production device according to claim 1, **characterised in that** the spinning nozzle unit (10a - 10f) is configured to be at least partially permeable to the electromagnetic radiation and/or **in that** the irradiation unit comprises at least one radiation-guiding element in order to couple the electromagnetic radiation into the spinning nozzle unit.

3. The filament production device according to claim 1 or 2, **characterised in that** the polymerisation unit (18a - 18f) comprises at least one irradiation unit (20a - 20f), which is provided for applying electromagnetic radiation to the polymer solution (12a) in order to initiate the polymerisation.

4. The filament production device according to claim 1 to 3, **characterised in that** the irradiation unit (20) comprises at least one radiation-guiding element (22a, 22c - 22f; 24a - 24f) which is provided for coupling the electromagnetic radiation at least partially into the spinning nozzle unit (10a - 10f).

5. The filament production device according to claim 1 to 4, **characterised in that** the spinning nozzle unit (10c) has at least one further polymer solution channel (36c), wherein the polymer solution channel (34c) and the further polymer solution channel (36c) are provided for guiding different polymer solutions (12c, 14c).

6. The filament production device according to claim 1 to 5, **characterised in that** the irradiation unit (20a - 20f) is provided for coupling the electromagnetic radiation at least partially into at least one channel (26a - 26f; 34a - 34f; 36c) of the spinning nozzle unit (10a - 10f).

7. The filament production device according to any one of the preceding claims, **characterised in that** the polymerisation unit (18a - 18c) comprises at least one feed unit (38a - 38c), which is provided for feeding a polymerisation initiator to at least one channel (26a - 26c; 34a - 34c; 36c) of the spinning nozzle unit (10a - 10c).

8. The filament production device according to any one of the preceding claims, **characterised by** a control unit (46a - 46c), which is provided for controlling the polymerisation unit (18a - 18c) for selective initiation of the polymerisation.

9. A production method, in particular a reaction-spinning production method, with a filament production device according to any one of the preceding claims, which comprises a spinning nozzle unit (10a - 10f) having at least one inner fluid channel (26a - 26f), which is provided for guiding an inner fluid (30a - 30c), and having at least one polymer solution channel (34a - 34f), which is provided for guiding the polymer solution (12a - 12c), wherein the polymer solution channel (34a - 34f) surrounds the inner fluid channel (26a - 26f) at least partially in at least one cross-section, wherein at least one filament (16a - 16c), which is formed as a hollow fibre membrane, is produced by means of the spinning nozzle unit (10a - 10f) from at least one polymer solution (12a - 12f), **characterised in that** a polymerisation is initiated at least partially within the spinning nozzle unit (10a - 10f) by applying electromagnetic radiation to the inner fluid and, optionally, also to the polymer solution and **in that** at least the polymer solution (12a - 12c; 14c) has heat energy applied thereto by means of the temperature-control unit (44a - 44c) of the polymerisation unit (18a - 18f), for initiating the polymerisation.

## Revendications

1. Dispositif de production de filaments, en particulier dispositif de production de filaments par filage réactif, avec au moins une unité de filière (10a - 10f), qui est prévue pour produire à partir d'au moins une solution de polymère (12a) au moins un filament (16a - 16f), qui est conçu comme une membrane à fibre creuse, et avec une unité de polymérisation (18a - 18f), qui est prévue pour initier une polymérisation de la solution de polymère (12a; 14b), où l'unité de polymérisation (18a - 18f) est prévue pour initier la polymérisation au moins en partie à l'intérieur de l'unité de filière (10a -10f); où l'unité de filière (10a - 10f) présente au moins un canal de fluide interne (26a - 26f), qui est prévu pour conduire un fluide interne (30a - 30c), et au moins un canal de solution de polymère (34a - 34f), qui est prévu pour conduire la solution de polymère (12a - 12c), où le canal de solution de polymère (34a - 34f) entoure au moins en partie le canal de fluide interne (26a - 26f) dans au moins une section transversale, **caractérisé en ce que** l'unité de polymérisation comprend une unité d'irradiation pour exposer le fluide interne à l'intérieur de l'unité de filière au rayonnement électromagnétique et **en ce que** l'unité de polymérisation (18a - 18c) présente une unité de régulation de température (44a - 44c) qui est prévue pour exposer à de l'énergie thermique au moins la solution de polymère (12a - 12c; 14c) pour initier la polymérisation.

2. Dispositif de production de filaments selon la revendication 1, **caractérisé en ce que** l'unité de filière (10a - 10f) est conçue de manière au moins en partie transparente au rayonnement électromagnétique et/ou l'unité d'irradiation comprend au moins un élément conducteur de rayonnement pour injecter le rayonnement électromagnétique dans l'unité de filière.

3. Dispositif de production de filaments selon la revendication 1 ou 2, **caractérisé en ce que** l'unité de polymérisation (18a - 18f) comprend au moins une unité d'irradiation (20a - 20f) qui est prévue pour exposer à un rayonnement électromagnétique la solution de polymère (12a) pour initier la polymérisation.

4. Dispositif de production de filaments selon l'une des revendications 1 à 3, **caractérisé en ce que** l'unité d'irradiation (20) comprend au moins un élément conducteur de rayonnement (22a, 22c - 22f; 24a - 24f), qui est prévu pour injecter au moins en partie le rayonnement électromagnétique dans l'unité de filière (10a - 10f).

5. Dispositif de production de filaments selon l'une des revendications 1 à 4, **caractérisé en ce que** l'unité de filière (10c) comprend au moins un autre canal de solution de polymère (36c), où le canal de solution de polymère (34c) et l'autre canal de solution de polymère (36c) sont prévus pour conduire différentes solutions de polymère (12c, 14c).

6. Dispositif de production de filaments selon l'une des revendications 1 à 5, **caractérisé en ce que** l'unité d'irradiation (20a - 20f) est prévue pour injecter au moins en partie le rayonnement électromagnétique dans au moins un canal (26a - 26f; 34a - 34f; 36c) de l'unité de filière (10a - 10f).

7. Dispositif de production de filaments selon l'une des revendications précédentes, **caractérisé en ce que** l'unité de polymérisation (18a - 18c) comprend au moins une unité d'apport (38a - 38c) qui est prévue pour apporter un initiateur de polymérisation à au moins un canal (26a - 26c; 34a - 34c; 36c) de l'unité de filière (10a - 10c).

8. Dispositif de production de filaments selon l'une des revendications précédentes, **caractérisé par** une unité de commande (46a - 46c) qui est prévue pour commander l'unité de polymérisation (18a - 18c) pour l'initiation ciblée de la polymérisation.

9. Procédé de production, en particulier procédé de production par filage réactif, avec un dispositif de production de filaments selon l'une des revendications précédentes, qui comprend une unité de filière (10a - 10f) avec au moins un canal de fluide interne (26a - 26f), qui est prévu pour conduire un fluide interne (30a - 30c), et au moins un canal de solution de polymère (34a - 34f) qui est prévu pour conduire la solution de polymère (12a - 12c), où le canal de solution de polymère (34a - 34f) entoure au moins en partie le canal de fluide interne (26a - 26f) dans au moins une section transversale, où au moins un filament (16a - 16c), qui est conçu comme une membrane à fibre creuse, est produit au moyen de l'unité de filière (10a - 10f) à partir d'au moins une solution de polymère (12a - 12f), **caractérisé en ce qu'**une polymérisation est initiée au moins en partie à l'intérieur de l'unité de filière (10a - 10f) par le fait que le fluide interne et éventuellement aussi la solution de polymère sont exposés à un rayonnement électromagnétique, et **en ce qu'**au moins la solution de polymère (12a - 12c; 14c) est exposée à de l'énergie thermique au moyen de l'unité de régulation de température (44a - 44c) de l'unité de polymérisation (18a - 18c) pour initier la polymérisation.
